# EUROPÄISCHE PATENTSCHRIFT

(11) **EP 3 021 728 B1**
(45) Veröffentlichungstag und Bekanntmachung des Hinweises auf die Patenterteilung: **13.10.2021**
(21) Anmeldenummer: 14736861.7
(22) Anmeldetag: 10.07.2014
(51) Int. Cl.: A47L 15/00, A47L 15/42

(54) **GESCHIRRSPÜLMASCHINE MIT EINEM IN EINEM WASSERBEHÄLTER INTEGRIERTEN ABFLUSSROHRLEITUNGSABSCHNITT**
DISHWASHER HAVING A DRAIN PIPE SECTION INTEGRATED IN A WATER CONTAINER
LAVE-VAISSELLE COMPRENANT UNE PARTIE DE CONDUITE TUBULAIRE D'ÉVACUATION INTÉGRÉE DANS UN RÉCIPIENT D'EAU

(30) Priorität: 17.07.2013 DE 102013213972
(43) Veröffentlichungstag der Anmeldung: 25.05.2016
(73) Patentinhaber: BSH Hausgeräte GmbH, 81739 München (DE)
(72) Erfinder: FAUTH, Michael, 91785 Pleinfeld (DE); REITER, Andreas, 89435 Finningen (DE); RIEDINGER, Jochen, 89407 Dillingen (DE); RIEGER, Roland, 73492 Rainau (DE)
(86) Internationale Anmeldenummer: PCT/EP2014/064821
(87) Internationale Veröffentlichungsnummer: WO 2015/007605

(56) Entgegenhaltungen:
- EP-A1- 2 543 305
- DE-A1- 3 900 617

## Beschreibung

Die Erfindung betrifft eine Geschirrspülmaschine, insbesondere Haushaltsgeschirrspülmaschine, mit einer Steuereinrichtung zur Steuerung eines Spülgangs zum Reinigen von Spülgut anhand wenigstens eines in der Steuereinrichtung hinterlegten Spülprogramms, mit einem Spülbehälter zur Aufnahme des Spülguts, mit einem Wasserbehälter zum Bevorraten von Wasser, insbesondere von Frischwasser, mit einer durch die Steuereinrichtung steuerbaren Ventilanordnung zum Befüllen des Spülbehälters mit Wasser, insbesondere mit Frischwasser, und mit einer durch die Steuereinrichtung steuerbaren Laugenpumpe zum Abpumpen von Abwasser aus dem Spülbehälter über eine Abflussrohrleitung, die durch den Wasserbehälter hindurchgeführt ist.

Bei einer derartigen Geschirrspülmaschine, wie sie beispielsweise in der EP 2 543 305 A1 beschrieben ist, ist vorgesehen, dass das im Wasserbehälter bevorratete Wasser dem während eines Teilspülgangs eines Spülgangs erwärmten Abwasser Wärme entzieht, so dass weniger Energie für die Erwärmung des bevorrateten Wassers auf eine gewünschte Temperatur erforderlich ist. Wenn der Wasserbehälter in wärmeleitendem Kontakt mit einem Wandabschnitt des Spülbehälters steht, kann der Wasserbehälter insbesondere gleichzeitig dazu dienen, während eines Trocknungsschritts den Wandabschnitt des Spülbehälters, mit dem er in wärmeleitendem Kontakt steht, durch Einfüllen eines Kaltwasservolumens zu kühlen, so dass der Wandabschnitt als Kondensationsfläche für im Spülbehälter befindliche Feuchtigkeit wirkt, was zur Verbesserung der Trocknungswirkung des Trocknungsschrittes dienen kann. In der Praxis kann es jedoch vorkommen, dass der abschließende Trocknungsgang eines Spülgangs bei einer derartig integrierten Hindurchführung eines Abschnitts der Abflussrohrleitung durch den Wasserbehälter weniger effizient als ohne diese "Abwasserwärmerückgewinnung", d.h. ohne Abflussrohrleitungsabschnitt im Wasserbehälter, funktioniert.

Aufgabe der Erfindung ist es, eine Geschirrspülmaschine bereitzustellen, bei welcher die zur Erwärmung des Spülwassers notwendige Energiemenge gesenkt werden kann, ohne hierdurch das Trocknungsergebnis zu verschlechtern.

Die Aufgabe wird bei einer Geschirrspülmaschine der eingangs genannten Art dadurch gelöst, dass das Spülprogramm so ausgebildet ist, dass am Ende eines Klarspülschritts eine Schlusspumpsequenz vorgesehen ist, die einen Spülwasserabpumpschritt zum Abpumpen eines während des Klarspülschritts zum Beaufschlagen von Spülgut verwendeten Spülwassers als Abwasser mittels der Laugenpumpe, einen Kaltwassereinfüllschritt zum Einfüllen eines Kaltwasservolumens in den Spülbehälter mittels der Ventilanordnung und einen Kaltwasserabpumpschritt zum Abpumpen des während des Kaltwassereinfüllschritts eingefüllten Kaltwasservolumens mittels der Laugenpumpe als Abwasser umfasst.

Durch die Einfüllung eines Kaltwasservolumens in den Abflussrohrleitungsabschnitt, der im Wasserbehälter verlegt bzw. angeordnet ist, am Ende des Klarspülschritts, d.h. vor Beginn des nachfolgenden Trocknungsschritts eines Geschirrspülprogramms, bei dessen Beginn Kaltwasser in den Wasserbehälter zur Kühlung eines Wandabschnitts des Spülbehälters eingefüllt wird, kann sichergestellt werden, dass das für den Trocknungsschritt in den Wasserbehälter eingefüllte Kaltwasser nicht schon zusätzlich durch erwärmtes Abwasser, das im durch den Wasserbehälter geführten Abflussrohrleitungsabschnitt vom Abpumpvorgang des vorausgehenden Klarspülschritts stehen geblieben ist, erwärmt wird. Allgemein ausgedrückt wird also Kaltwasser in den im Wasserbehälter integrierten Abflussrohrleitungsabschnitt gepumpt, bevor dessen Speicher mit Kaltwasser für den Geschirrspülprogramm- abschließenden Trocknungsschritt gefüllt wird. Dadurch kann der Wandflächenabschnitt des Spülbehälters, mit dem der Wasserbehälter wärmeleitend gekoppelt ist, und der als Kondensationsfläche dient, im Wesentlichen mit der gesamten Kühlleistung gekühlt werden, die durch die Befüllung des Wasserbehälters mit Kaltwasser bereitgestellt wird. Wenn hingegen durch die Abflussrohrleitung abgepumptes, erwärmtes Abwasser eines Klarspülschritts das Kaltwasservolumen im Wasserbehälter beim Trocknungsschritt mit erwärmen würde, würde dies zu einer höheren Temperatur der Kondensationsfläche des Spülbehälters als ohne Durchführung der Abflussrohrleitung durch den Wasserbehälter führen. Dies würde zu einer Verschlechterung des Trocknungsergebnisses der Geschirrspülmaschine im dem Klarspülschritt nachfolgenden Trocknungsschritt führen.

Bei modernen Geschirrspülmaschinen wird das Spülgut, insbesondere zu spülendes Geschirr, in einen Spülbehälter eingebracht und dort in einem Spülprozess, der auch Spülgang genannt wird, unter Zuhilfenahme von Wasser gereinigt und anschließend getrocknet. Ziel ist es dabei, einen Spülgang so durchzuführen, dass ein vordefiniertes Reinigungsergebnis und ein vordefiniertes Trocknungsergebnis möglichst effizient erreicht werden. Gefordert ist dabei eine hohe Gesamteffizienz, welche sich insbesondere aus der Reinigungseffizienz und der Trocknungseffizienz ergibt. Die Reinigungseffizienz entspricht dabei dem Verhältnis des mittels eines Spülgangs erzielten Reinigungsergebnisses und dem hierzu erforderlichen Aufwand, wobei der Aufwand mehrere Dimensionen, beispielsweise den Energiebedarf, den Wasserbedarf und/oder den Zeitbedarf, umfassen kann. Weiterhin entspricht die Trocknungseffizienz dem Verhältnis des mittels eines Spülgangs erzielten Trocknungsergebnisses und dem hierzu erforderlichen Aufwand, wobei der Aufwand auch hier mehrere Dimensionen, beispielsweise den Energiebedarf und/oder den Zeitbedarf, umfassen kann.

Bei modernen Geschirrspülmaschinen ist in aller Regel eine Steuereinrichtung vorgesehen, bei der ein oder mehrere Spülprogramme zur Steuerung eines Spülgangs zum Reinigen von Spülgut hinterlegt sind. Die Steuereinrichtung kann insbesondere als Ablaufsteuereinrichtung ausgebildet sein und steuernd. und/oder ggf. auch regelnd, d.h. verallgemeinert ausgedrückt kontrollierend auf den Spülprozess einwirken. Die Ablaufsteuereinrichtung ist dabei so ausgebildet, dass sie einen Spülgang nach einem, üblicherweise durch einen Bediener ausgewählten, Spülprogramm automatisch kontrolliert bzw. reguliert und durchführt.

Ein Spülprogramm weist insbesondere mehrere aufeinander folgende Programmschritte zur Behandlung des Spülguts auf. Dabei kann das Wasser in den wasserführenden Programmschritten jeweils in Abhängigkeit von dem jeweiligen Programmschritt bei Bedarf zweckmäßigerweise mit Reinigungs- und/oder Zusatzstoffen versehen und/oder auf eine für den jeweiligen Programmschritt günstige Temperatur gebracht werden. Um das zum Spülen vorgesehene Wasser mit den vorgesehenen Reinigungs- und/oder Zusatzstoffen versehen zu können, können moderne Geschirrspülmaschinen vorzugsweise, insbesondere automatische, Dosiereinrichtungen aufweisen. Weiterhin können Geschirrspülmaschinen eine üblicherweise elektrische Heizeinrichtung aufweisen, um das zum Spülen vorgesehene Wasser auf die erforderlichen Temperaturen zu bringen.

Weiterhin können Geschirrspülmaschinen eine (oder mehrere), üblicherweise elektrische, Heizeinrichtung(en) aufweisen, um das zum Spülen vorgesehene Wasser auf die erforderlichen Temperaturen zu bringen. Als Heizeinrichtung kann im Flüssigkeitssystem der Geschirrspülmaschine vorzugsweise ein Durchlauferhitzer vorgesehen sein. Zweckmäßigerweise kann dieser mit der Umwälzpumpe der Geschirrspülmaschine zu einer Baueinheit zusammengefasst sein. Insbesondere kann die Heizeinrichtung in das Gehäuse der Umwälzpumpe integriert sein, so dass eine kompakte "Heizpumpe" bereitgestellt ist. Zusätzlich oder unabhängig hiervon kann als Heizeinrichtung ggf. eine Luftheizung vorgesehen sein. Diese kann zweckmäßigerweise in einen Luftkanal eingefügt sein, dessen eingangsseitiges Ende an eine Ausgangsöffnung des Spülbehälters sowie dessen ausgangsseitiges Ende an eine Eingangsöffnung des Spülbehälters angeschlossen ist. Somit ist der Luftkanal mit dem Innenraum des Spülbehälters verbunden und bildet zusammen mit diesem einen Luftumwälzkreislauf. In diesen kann insbesondere ein Lüfter eingefügt sein. Ggf. kann der Luftkanal mindestens eine Verbindung zur Außen- bzw. Umgebungsluft z.B. über eine Abzweigleitung oder Ventilvorrichtung haben, um Außenluft der Luft aus dem Spülbehälter zumischen oder Luft aus dem Spülbehälter in die Umgebung ableiten zu können. Auf diese Weise kann von der Luftheizung erwärmte Luft ihre Wärmeenergie an die Flüssigkeit im Spülbehälter direkt oder indirekt transferieren. Zusätzlich oder unabhängig hiervon kann ein solcher Luftkanal mit Luftheizung in analoger Weise mit einer sonstigen Komponente wie z.B. der Umwälzpumpe des Flüssigkeitssystems der Geschirrspülmaschine thermisch gekoppelt sein, so dass von der erwärmten Luft Wärmeenergie auf die Flüssigkeit übertragen werden kann. In den Luftkanal kann vorteilhafterweise eine sogenannte Sorptionskolonne mit reversibel dehydrierbarem Sorptionstrocknungsmaterial wie z.B. Zeolith eingebaut sein. Dieses dient der Adsorption von Feuchtigkeit aus der Luft des Spülbehälters während des Trocknungsgangs des Spülgangs, der vom jeweilig gewählten Spülprogramm durchgeführt wird. Insbesondere bilden der Luftkanal, die Luftheizung, die Sorptionskolonne, sowie der Lüfter bzw. das Gebläse Bestandteile eines Sorptionstrocknungssystems.

Ein typisches Spülprogramm umfasst zur Reinigung des Spülguts in dieser Reihenfolge vorzugsweise einen Vorspülschritt, einen Reinigungsschritt, einen Zwischenspülschritt und einen Klarspülschritt, bei denen das Spülgut jeweils mit Wasser beaufschlagt wird. Derartige Programmschritte werden wasserführende Programmschritte genannt. Es können jedoch auch Spülprogramme vorgesehen sein, bei denen einer oder mehrere dieser Programmschritte ausgeblendet sind. Auch sind Spülprogramme möglich, bei denen einer oder mehrere dieser Programmschritte mehrfach durchlaufen werden. Weiterhin umfasst ein typisches Spülprogramm einen sich daran anschließenden, spülprogrammabschließenden Trocknungsschritt zum Trocknen des gereinigten Spülguts.

Ein Vorspülschritt dient dabei vor allem der Entfernung von gröberen Verschmutzungen vom Spülgut. Der Zweck eines nachfolgenden Reinigungsschritts besteht darin, Verschmutzungen vollständig von dem Spülgut zu entfernen. Ein nach dem Reinigungsschritt durchgeführter Zwischenspülschritt dient insbesondere der Entfernung von Reinigungsmittelresten, welche am Spülgut anhaften, vorzugsweise mittels sauberem Frischwasser. Ein darauffolgender Klarspülschritt ist insbesondere zur Vermeidung von Flecken auf dem Spülgut, welche durch gelöste Stoffe im Wasser, wie beispielsweise Salz und/oder Kalk, entstehen könnten, vorgesehen. Hierzu wird das Wasser während des Klarspülschritts mit Klarspüler versetzt.

Bei einer Geschirrspülmaschine mit einer sogenannten Eigenwärmetrocknung besteht eine weitere Aufgabe des Klarspülschritts darin, den nachfolgenden Trocknungsschritt vorzubereiten. Dabei wird das Spülgut während des Klarspülschritts auf eine hohe Temperatur aufgeheizt. Im abschließenden Trocknungsschritt verdunsten am heißen Spülgut anhaftende Wassertropfen und schlagen sich an der Innenseite des Spülbehälters aufgrund der dort (im Vergleich zur Temperatur des Spülguts) herrschenden niedrigeren Temperatur ab. Zusätzlich oder unabhängig hiervon kann der Trocknungsschritt ggf. mit Hilfe einer Sorptionstrockeneinrichtung durchgeführt werden.

Um den Wasserbedarf zur Durchführung eines Spülgangs zu decken, weisen Geschirrspülmaschinen vorzugsweise eine Frischwasserzulaufeinrichtung zum Aufnehmen von Frischwasser auf. Eine derartige Frischwasserzulaufeinrichtung ist dazu vorgesehen, insbesondere an eine externe Frischwasserversorgung angeschlossen zu werden, welche unter Druck stehendes Frischwasser bereitstellt. Dabei kann es sich beispielsweise um eine gebäudeseitig installierte Wasserleitung handeln.

Ferner umfasst die erfindungsgemäße Geschirrspülmaschine insbesondere einen Wasserbehälter als Wasserspeicher, der es erlaubt, Wasser zur späteren Verwendung zu bevorraten. Bei dem bevorrateten Wasser kann es sich insbesondere um Frischwasser, aber auch um nur leicht verschmutztes Wasser, welches bereits zum Beaufschlagen von Spülgut im Spülbehälter verwendet wurde, handeln.

Um nun den Wasserfluss zwischen der Frischwasserversorgung, dem Spülbehälter und dem Wasserbehälter automatisch steuern und/oder regeln zu können, ist eine durch die Steuereinrichtung steuerbare und/oder regelbare Ventilanordnung vorgesehen. Die Ventilanordnung kann ein durch die Steuereinrichtung steuerbares und/oder regelbares Frischwasserventil aufweisen, um so die Aufnahme von Frischwasser in Abhängigkeit vom Spülprogramm automatisch steuern zu können. Das Frischwasserventil kann in den Wasserbehälter münden, so dass dieser unmittelbar mit Frischwasser befüllt werden kann. Es ist aber auch denkbar, dass das Frischwasserventil in den Spülbehälter mündet.

Dabei kann vorgesehen sein, dass im Spülbehälter befindliches Wasser mittels einer durch die Steuereinrichtung steuerbaren Pumpe, beispielsweise einer Umwälzpumpe, und ggf. mittels einer durch die Steuereinrichtung schaltbaren Wasserweiche, in den Wasserbehälter pumpbar ist

Um Wasser aus dem Wasserbehälter in den Spülbehälter leiten zu können, kann ein durch die Steuereinrichtung steuerbares und/oder regelbares Ablaufventil vorgesehen sein.

Die Temperatur einer haushaltsüblichen Frischwasserversorgung liegt in aller Regel unter einer Umgebungstemperatur, in der eine Geschirrspülmaschine betrieben wird. Dabei ist es möglich, das für einen Spülgang benötigte Frischwasser aus der Frischwasserversorgung in den Wasserbehälter einzuleiten und es dort für eine bestimmte Verweilzeitdauer zu speichern, bevor es für die Durchführung des Spülgangs wieder aus dem Wasserbehälter entnommen wird. In dieser Verweilzeit- bzw. Aufenthaltszeitdauer, während der sich das Frischwasser im Wasserbehälter befindet, kann sich das Frischwasser erwärmen, so dass für den Spülgang vorgewärmtes Frischwasser zur Verfügung steht. Im Idealfall weist das vorgewärmte Frischwasser eine Temperatur auf, welche der Umgebungs- oder Raumtemperatur am Aufstellort der Geschirrspülmaschine entspricht. Diese kann beispielsweise 8° C bis10° C über der Temperatur der Frischwasserversorgung liegen.

Zusätzlich oder unabhängig hiervon ist es aber auch möglich, in dem Wasserbehälter Wasser zu bevorraten, welches bereits während eines Programmschritts zum Beaufschlagen von Spülgut verwendet wurde, um es in einem späteren Programmschritt desselben oder eines späteren Spülgangs erneut zum Beaufschlagen von Spülgut zu verwenden. Der Wasserbehälter fungiert in diesem Fall also als sogenannter Spülflottenspeicher. Auf diese Weise kann der Frischwasserbedarf sowie der Energiebedarf zum Beheizen von Wasser gesenkt werden.

Der Wasserbehälter steht in wärmeleitender Verbindung mit dem Spülbehälter. Beispielsweise kann eine von einem Gehäuse der Geschirrspülmaschine abgewandte Seitenwand des Wasserbehälters in im Wesentlichen flächiger Verbindung mit einem Wandabschnitt des Spülbehälters stehen, oder mit einer dünnen Schicht Bitumen oder dergleichen von z. B. 2 mm Dicke an diesem fixiert sein. Eine solche wärmeleitende Verbindung zwischen Spülbehälter und Wasserbehälter kann insbesondere dazu dienen, dass die Erwärmung des Spülbehälters durch das Spülwasser, das für ein oder mehrere Teilspülgänge des Spülgangs eines durchzuführenden Geschirrspülprogramms mittels ein oder mehrerer Heizeinrichtungen wie z.B. einem Durchlauferhitzer auf eine gewünschte Arbeitstemperatur aufgeheizt wird, zusätzlich zum Wärmetausch genutzt wird, um das Wasser, insbesondere das Frischwasser, im Wasserbehälter vorzuerwärmen. Dieses vorerwärmte Wasser kann dann für die Durchführung eines nachfolgenden Teilspülgangs in den Spülbehälter eingelassen werden, für den eine Aufheizung des Wassers auf eine bestimmte Arbeitstemperatur gefordert ist.

Zusätzlich oder unabhängig hiervon, kann dieser mit dem Wasserbehälter wärmeleitend gekoppelte Wandabschnitt des Spülbehälters durch Einfüllen eines Kaltwasservolumens in den Wasserbehälter gekühlt werden, so dass der Wandabschnitt als Kondensationsfläche für im Spülbehälter befindliche Feuchtigkeit wirkt, was insbesondere zur Verbesserung der Trocknungswirkung eines Trocknungsschrittes dienen kann.

Weiterhin umfasst die erfindungsgemäße Geschirrspülmaschine eine Laugenpumpe, auch Abwasserpumpe genannt, welche es ermöglicht, Abwasser, also Wasser, das nicht zur weiteren Verwendung vorgesehen ist, über eine Abflussrohrleitung aus dem Spülbehälter abzupumpen. Dabei ist vorgesehen, die Abwasserrohrleitung mit einer externen, insbesondere gebäudeseitig installierten Abwasserentsorgungseinrichtung zu verbinden, um so das Abwasser zu entsorgen.

Weiterhin ist die Abflussrohrleitung durch den Wasserbehälter hindurch geführt. Sofern nun das durch die Abflussrohrleitung abgeführte Abwasser wärmer als das im Wasserspeicher bzw. Wasserbehälter bevorratete Wasser ist, so entzieht das im Wasserbehälter für eine spätere Verwendung bevorratete Wasser dem abgepumpten Abwasser Wärmeenergie und erwärmt sich auf eine gegenüber seiner ursprünglichen Einlasswassertemperatur höhere Speichertemperatur, so dass grundsätzlich weniger zusätzliche Heizenergie dafür aufgebracht werden muss, das aus dem Wasserbehälter in den Spülbehälter oder verallgemeinert ausgedrückt in das Flüssigkeitssystem der Geschirrspülmaschine mit der Speichertemperatur eingelassene Wasser für seine Verwendung im Spülbehälter oder verallgemeinert ausgedrückt Flüssigkeitssystem auf eine gewünschte Endtemperatur zu bringen. Die End bzw. Arbeitstemperatur liegt dabei vorzugsweise höher als die Speichertemperatur. Wenn für das in den Spülbehälter und/oder in das Flüssigkeitssystem aus dem Wasserbehälter eingelassene Wasser bereits die Speichertemperatur als Endtemperatur genügt, kann eine zusätzliche Aufheizung des Wassers mittels Heizmittel ganz entfallen, d.h. es reicht dann bereits allein der Wärmeenergietransfer vom abgepumpten Abwasser auf das im Wasserbehälter zwischengespeicherte Wasser, um dessen Temperatur auf eine gewünschte Endtemperatur für seine nachfolgende Verwendung im Spülbehälter oder verallgemeinert ausgedrückt Flüssigkeitssystem zu bringen.

Erfindungsgemäß ist es nun vorgesehen, dass das Spülprogramm so ausgebildet ist, dass am Ende eines Klarspülschritts eine Schlusspumpsequenz vorgesehen ist, welche einen Spülwasserabpumpschritt zum Abpumpen eines während des Klarspülschritts zum Beaufschlagen von Spülgut verwendeten Spülwassers als Abwasser mittels der Laugenpumpe, einen Kaltwassereinfüllschritt zum Einfüllen eines Kaltwasservolumens in den Spülbehälter mittels der Ventilanordnung und einen Kaltwasserabpumpschritt zum Abpumpen des während des Kaltwassereinfüllschritts eingefüllten Kaltwasservolumens mittels der Laugenpumpe als Abwasser umfasst.

Durch den Spülwasserabpumpschritt wird das in der Regel sehr heiße Spülwasser des Klarspülschritts nach Außen abgepumpt, so dass sich der Spülbehälter schneller als ein mit dem heißen Klarspülwasser befüllter Spülbehälter, insbesondere durch Wärmeleitung und Wärmestrahlung, abkühlen kann. Indem nun mittels eines eigens vorgesehenen Kaltwassereinfüllschritts ein Kaltwasservolumen in den Spülbehälter eingefüllt wird, kühlt der Spülbehälter weiter ab. Der Begriff Kaltwasservolumen bezieht sich dabei auf eine vorbestimmte Menge an Wasser, welche eine niedrigere Temperatur als das zuvor abgepumpte Spülwasser des Klarspülschritts aufweist. Bei dem Kaltwasservolumen kann es sich um Frischwasser oder um im Wasserbehälter bevorratetes Wasser handeln. Indem nun im Kaltwasserabpumpschritt das Kaltwasservolumen abgepumpt wird, wird auch die Abflussrohrleitung, welche zuvor beim Abpumpen der heißen Spülflüssigkeit erwärmt wurde, abgekühlt. Auf diese Weise sinkt auch die Temperatur im Wasserbehälter. Im Ergebnis steht nun nach Abschluss der Schlusspumpsequenz eine Geschirrspülmaschine mit einem vorgekühlten Spülbehälter und einem vorgekühlten Wasserbehälter bereit, so dass insbesondere die dem Wasserbehälter benachbarte Kondensationsfläche eine niedrigere Temperatur aufweist als bei einer Abpumpsequenz, die lediglich das Abpumpen des Spülwassers des Klarspülschrittes vorsieht. Hierdurch kann im nachfolgenden Trocknungsschritt eine verbesserte Kondensierung der im Spülbehälter befindlichen Feuchtigkeit bewirkt werden, was letztlich das Trocknungsergebnis ohne wesentlichen zusätzlichen Zeit- und/oder Energiebedarf verbessert.

Gemäß einer bevorzugten Weiterbildung der Erfindung ist das Spülprogramm so ausgebildet, dass das Abpumpen des während des Klarspülschritts zum Beaufschlagen von Spülgut verwendeten Spülwassers als Abwasser mittels der Laugenpumpe während des Spülwasserabpumpschritts kontinuierlich erfolgt. Unter kontinuierlichem Abpumpen wird dabei verstanden, dass ohne Pausen abgepumpt wird. Auf diese Weise kann eine Übertragung von Wärmeenergie vom Spülwasser des Klarspülgangs auf die Abflussrohrleitung und damit in den Wasserbehälter minimiert werden.

Nach einer bevorzugten Weiterbildung der Erfindung ist das Spülprogramm so ausgebildet, dass das Abpumpen des während des Klarspülschritts zum Beaufschlagen von Spülgut verwendeten Spülwassers als Abwasser mittels der Laugenpumpe während des Spülwasserabpumpschritts so erfolgt, dass des während des Klarspülschritts zum Beaufschlagen von Spülgut verwendete Spülwasser vollständig abgepumpt ist. Unter vollständigem Abpumpen wird dabei verstanden, dass allenfalls eine nicht abpumpbare Restmenge von Spülwasser im Spülbehälter verbleibt. Auf diese Weise wird die nach Außen transportierte Wärmemenge maximiert.

Gemäß einer bevorzugten Weiterbildung der Erfindung ist das Spülprogramm so ausgebildet, dass das während des Kaltwassereinfüllschritts in den Spülbehälter mittels der Ventilanordnung eingefüllte Kaltwasservolumen Frischwasser umfasst, welches insbesondere während des Kaltwassereinfüllschritts einer externen Wasserversorgungseinrichtung entnommen ist. Indem das Kaltwasservolumen zumindest teilweise, bevorzugt ausschließlich, aus während dem Kaltwassereinfüllschritt der externen Wasserversorgungseinrichtung entnommenen Frischwasser besteht, weist das Kaltwasservolumen in der Regel eine besonders niedrige Temperatur auf, so dass der Spülbehälter und der Wasserbehälter besonders gut gekühlt werden.

Nach einer bevorzugten Weiterbildung der Erfindung ist das Spülprogramm so ausgebildet, dass das Kaltwasservolumen, welches während des Kaltwassereinfüllschritts eingefüllt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen dem Ausgang der Laugenpumpe und dem Eingang des Wasserbehälters angeordneten Abschnitts der Abflussrohrleitung und eines im Wasserbehälter angeordneten Abschnitts der Abflussrohrleitung beträgt. Das Innenvolumen des zwischen dem Ausgang der Laugenpumpe und dem Eingang des Wasserbehälters angeordneten Abschnitts der Abflussrohrleitung und des im Wasserbehälter angeordneten Abschnitts der Abflussrohrleitung ist dabei jenes Volumen, welches das Abwasser in jenem Abschnitt der Abwasserrohrleitung einnehmen kann, der sich von der Laugenpumpe bis zum Austritt der Abwasserrohrleitung aus dem Wasserbehälter erstreckt. Optimal kann die Abflussrohrleitung dann abgekühlt werden, wenn in dem Kaltwasserabpumpschritt das genannte Innenvolumen der Abflussrohrleitung mit dem Kaltwasservolumen gefüllt wird. Durch die Verwendung der angegebenen Mindestwerte und Maximalwerte für das Kaltwasservolumen kann dieses Ziel zumindest annähernd erreicht werden.

Gemäß einer bevorzugten Weiterbildung der Erfindung ist das Spülprogramm so ausgebildet, dass der Spülwasserabpumpschritt, der Kaltwassereinfüllschritt und der Kaltwasserabpumpschritt ohne zwischenzeitliche Pausen durchgeführt sind. Unter einer Durchführung ohne zwischenzeitliche Pausen wird dabei verstanden, dass der Spülwasserabpumpschritt, der Kaltwassereinfüllschritt und der Kaltwasserabpumpschritt ohne eine wesentliche Unterbrechung des Programmablaufs, sondern zusammenhängend durchgeführt werden. Auf diese Weise kann die Gesamtlaufzeit des Spülprogramms minimiert werden.

Nach einer bevorzugten Weiterbildung der Erfindung ist das Spülprogramm so ausgebildet, dass der Spülwasserabpumpschritt und der Kaltwassereinfüllschritt ohne zeitliche Überlappung durchgeführt sind. Hierunter wird verstanden, dass der Kaltwassereinfüllschritt frühestens beginnt, wenn der Spülwasserabpumpschritt beendet ist, d.h. der Kaltwassereinfüllschritt wird nach dem Spülwasserabpumpschritt durchgeführt. Auf diese Weise wird insbesondere vermieden, dass sich das zugeführte Kaltwasservolumen und das heiße Spülwasser des Klarspülschritts vermischen, was zu einer verschlechterten Kühlung der Abflussrohrleitung während des Kaltwasserabpumpschritts führen könnte.

Gemäß einer bevorzugten Weiterbildung der Erfindung ist das Spülprogramm so ausgebildet, dass nach dem Beginn des Kaltwasserabpumpschritts ein Wasserbehälterfüllschritt zum Befüllen des Wasserbehälters mit Frischwasser, welches insbesondere während des Wasserbehälterfüllschritt einer externen Wasserversorgungseinrichtung entnommen ist, durchgeführt ist. Auf diese Weise wird durch die Wärmeleitende Verbindung zwischen dem Spülbehälter und dem Wasserbehälter durch das im Vergleich zum Spülwasser des Klarspülschritts kalte Frischwasser wenigstens ein Teil des Spülbehälters gekühlt, so dass eine Kondensationsfläche für im Spülbehälter befindliche Feuchtigkeit geschaffen wird. Hierdurch kann ein hervorragendes Trocknungsergebnis im Trocknungsschritt erreicht werden. Da zuvor insbesondere die Abflussrohrleitung mittels des Kaltwasservolumens im Kaltwasserabpumpschritt gekühlt wurde, weist die Temperatur des Frischwassers im Wasserbehälter im Wesentlichen denjenigen Wert auf, den sie auch hätte, wenn die Abflussrohrleitung nicht durch den Wasserbehälter geführt wäre. Auf diese Weise kann ein hervorragendes Trocknungsergebnis mit den Vorteilen der Wärmerückgewinnung kombiniert werden. Dabei ist es besonders vorteilhaft, wenn das Frischwasser erst während des Wasserbehälterfüllschritts von der externen Wasserversorgungseinrichtung aufgenommen wird, da es in diesem Fall eine besonders niedrige Temperatur aufweist. Grundsätzlich könnte aber auch bevorratetes Frischwasser verwendet werden.

Nach einer bevorzugten Weiterbildung der Erfindung ist das Spülprogramm so ausgebildet, dass zwischen dem Beginn des Kaltwasserabpumpschritts und dem Beginn des Wasserbehälterfüllschritts eine Kühlzeit zum Kühlen der Abflussrohrleitung vorgesehen ist, welche wenigstens 30 s, bevorzugt 60 s, besonders bevorzugt wenigsten 90 s beträgt. Auf diese Weise kann eine ausreichende Kühlung insbesondere der Abflussrohrleitung erzielt werden, bevor das Frischwasser eingefüllt wird, so dass das Frischwasser durch die Abflussrohrleitung allenfalls in geringem Maße erwärmt wird.

Gemäß einer bevorzugten Weiterbildung der Erfindung ist die Abflussrohrleitung als Abflussschlauch ausgebildet. Unter einem Schlauch ist hierbei eine flexible Leitung, insbesondere aus Kunststoff zu verstehen. Solche Schlauchleitungen sind einfach und kostengünstig zu fertigen und können aufgrund ihrer Flexibilität einfach im Wasserbehälter montiert werden.

Nach einer bevorzugten Weiterbildung der Erfindung ist die Abflussrohrleitung als Wellenrohrleitung ausgebildet, die eine Vielzahl von sich abwechselnden Wellentälern und Wellenbergen aufweist. Eine Wellenrohrleitung hat eine große Oberfläche, was eine schnelle Wärmeübertragung und einen hohen Wirkungsgrad des Wärmetauschers ermöglicht. Der Außendurchmesser der Wellenrohrleitung kann dabei in den Wellentälern beispielsweise 10 - 16 mm betragen. An den Wellenbergen kann der Außendurchmesser der Wellenrohrleitung beispielsweise 18 - 22 mm betragen. Der Längsabstand zwischen benachbarten Wellenbergen der Wellenrohrleitung kann beispielsweise 2 - 5 mm betragen.

Gemäß einer bevorzugten Weiterbildung der Erfindung ist die Abflussrohrleitung vorzugsweise als Rohrschlange mäandernd durch den Wasserbehälter geführt. Dies vergrößert die Oberfläche der Abflussrohrleitung im Wasserbehälter, was eine schnelle Wärmeübertragung und einen höheren Wirkungsgrad des Wärmetauschers ermöglicht.

Nach einer bevorzugten Weiterbildung der Erfindung ist die Abflussrohrleitung zur einstückigen Verbindung einer Laugenpumpe der Geschirrspülmaschine mit einer Abwasserentsorgungseinrichtung ausgebildet. In diesem Fall sind neben der Abflussrohrleitung keine weiteren Rohrstücke zwischen der Laugenpumpe und der Abwasserentsorgungseinrichtung vorzusehen. Somit müssen keine zusätzlichen Dichtstellen oder Kopplungsstücke in oder an der Abflussrohrleitung vorgesehen werden. Ferner kann somit die Abflussrohrleitung bereits vor der Montage im Wasserbehälter auf Dichtigkeit geprüft werden.

Gemäß einer bevorzugten Weiterbildung der Erfindung ist die Abflussrohrleitung eingangsseitig durch den Boden des Wasserbehälters geführt. Somit ist eine geringe Entfernung zur Laugenpumpe zum Abpumpen des Spülwassers aus dem Spülbehälter gewährleistet.

Nach einer bevorzugten Weiterbildung der Erfindung ist die Abflussrohrleitung eingangsseitig von einem unteren Teil des Wasserbehälters im Wesentlichen senkrecht zu einem oberen Teil des Wasserbehälters geführt. Somit wird der eingangsseitig höhere Druck durch die Laugenpumpe zum Abpumpen des Spülwassers aus dem Spülbehälter optimal genutzt.

Sonstige vorteilhafte Weiterbildungen der erfindungsgemäßen Geschirrspülmaschine sind in den Unteransprüchen wiedergegeben.

Weiterhin betrifft die Erfindung ein Verfahren zum Betreiben einer Geschirrspülmaschine, insbesondere nach einem der vorstehenden Ansprüche, mit einer Steuereinrichtung zur Steuerung eines Spülgangs zum Reinigen von Spülgut anhand wenigstens eines in der Steuereinrichtung hinterlegten Spülprogramms, mit einem Spülbehälter zur Aufnahme des Spülguts während des Spülgangs, mit einem Wasserbehälter zum Bevorraten von Wasser, insbesondere von Frischwasser, mit einer durch die Steuereinrichtung steuerbaren Ventilanordnung zum Befüllen des Spülbehälters mit Wasser, insbesondere mit Frischwasser, und mit einer durch die Steuereinrichtung steuerbaren Laugenpumpe zum Abpumpen von Abwasser aus dem Spülbehälter über eine Abflussrohrleitung, die durch den Wasserbehälter hindurch geführt ist.

Bei dem erfindungsgemäßen Verfahren ist vorgesehen, dass das Spülprogramm so ausgebildet ist, dass am Ende eines Klarspülschritts eine Schlusspumpsequenz durchgeführt wird, die einen Spülwasserabpumpschritt, bei dem ein während des Klarspülschritts zum Beaufschlagen von Spülgut verwendetes Spülwasser mittels der Laugenpumpe als Abwasser abgepumpt wird, einen Kaltwassereinfüllschritt, bei dem ein Kaltwasservolumen mittels der Ventilanordnung in den Spülbehälter eingefüllt wird, und einen Kaltwasserabpumpschritt, bei dem das während des Kaltwassereinfüllschritts eingefüllte Kaltwasservolumen mittels der Laugenpumpe als Abwasser abgepumpt wird, umfasst..

Das erfindungsgemäße Verfahren ermöglicht eine hohe Reinigungs- und Trocknungseffizienz der Geschirrspülmaschine bei verringertem Energieverbrauch.

Vorteilhafte Aus- und Weiterbildungen des erfindungsgemäßen Verfahrens sind bei der Beschreibung der beanspruchten Geschirrspülmaschine erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ein vorteilhaftes Ausführungsbeispiel einer erfindungsgemäßen Haushaltsgeschirrspülmaschine in einer schematischen Seitenansicht,
- **Figur 2**: eine schematische Schnittansicht durch einen Wasserbehälter der Geschirrspülmaschine der Figur 1, bei Blickrichtung senkrecht zu dessen Wandfläche, die außen an einer Wand des Spülbehälters der Geschirrspülmaschine montiert ist und etwa parallel zu dieser verläuft,
- **Figur 3**: ein Funktionsdiagramm der Geschirrspülmaschine der Figuren 1 und 2,
- **Figur 4**: einen beispielhaften Betriebsablauf der erfindungsgemäßen Geschirrspülmaschine der Figuren 1 bis 3, und
- **Figur 5**: eine Detaildarstellung des Betriebsablaufs der Figur 4.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

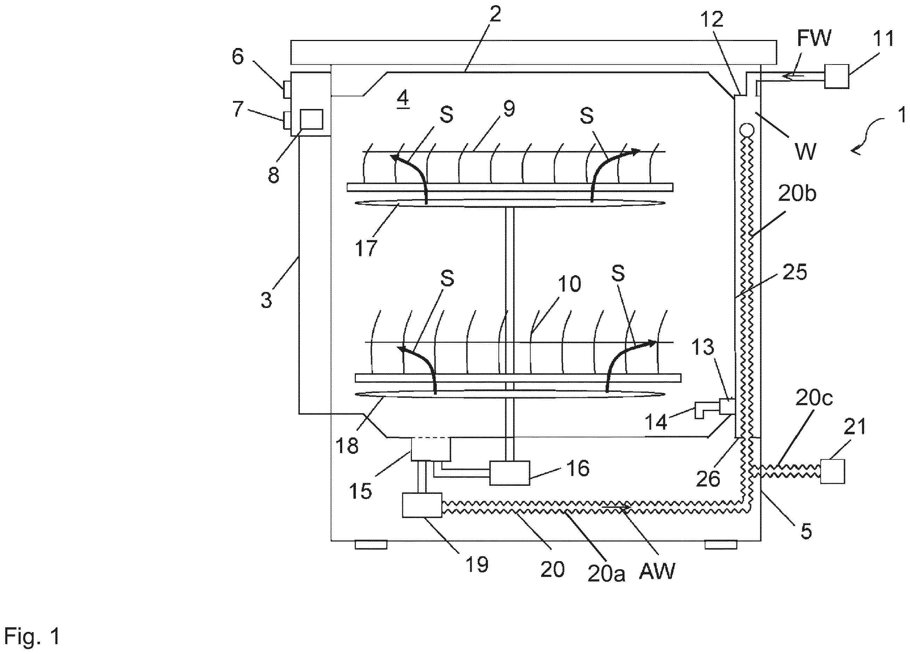

In der Figur 1 ist eine schematische Seitenansicht einer Geschirrspülmaschine 1 gemäß einem vorteilhaften Ausführungsbeispiel dargestellt. Die Geschirrspülmaschine 1 umfasst einen Spülbehälter 2, der durch eine Tür 3 wasserdicht verschließbar ist. Der Spülbehälter 2 und die Tür 3 bilden somit eine Spülkammer 4 zum Spülen von Spülgut. Dabei kann der Spülbehälter 2 im Inneren eines Gehäuses 5 angeordnet sein. Dieses Gehäuse 5 kann teilweise oder ganz weggelassen sein, wie z.B. bei Einbau-Geschirrspülmaschinen. Der Spülbehälter 2 kann beispielsweise aus Edelstahl mit einer Dicke von z. B. ca. 0,4 mm gefertigt sein. Die Tür 3 ist in Figur 1 in ihrer geschlossenen Stellung dargestellt. Durch Schwenken um eine am unteren Ende der Tür 3 vorgesehene Schwenkachse kann die Tür 3 zur Vorderseite hin geöffnet werden und Spülgut kann in die Geschirrspülmaschine 1 eingestellt oder daraus entnommen werden.

Am oberen Ende der Tür 3 können eine Bedieneinrichtung 6 und eine Anzeigeeinrichtung 7 vorgesehen sein, welche operativ mit einer Steuereinrichtung 8 verbunden sind. In der Steuereinrichtung 8 sind mehrere Spülprogramme gespeichert, welche mit Hilfe der Bedieneinrichtung 6 ausgewählt und gestartet werden können. Die Anzeigeeinrichtung 7 zeigt Statusinformationen an, z. B. über das ausgewählte Spülprogramm oder den Ablauf desselben. Die Steuereinrichtung 8 übernimmt Steuer- und/oder Regelungsfunktionen, d.h. verallgemeinert ausgedrückt Kontrollfunktionen für den Betrieb der Geschirrspülmaschine.

Die Geschirrspülmaschine 1 weist ferner einen oberen Geschirrkorb 9 und einen unteren Geschirrkorb 10 auf, in welche zu spülendes Geschirr jeweils eingestellt werden kann. Die Geschirrkörbe 9 und 10 können z.B. an Ausfahrschienen angeordnet sein, welche an sich gegenüberliegenden, in Tiefenrichtung erstreckenden Seitenwänden des Spülbehälters 2 befestigt sind. Ggf. kann zusätzlich auch eine aus der Spülkammer heraus- sowie in diese hineinbewegliche Besteckschublade vorhanden sein.

Als Spülwasser S zum Spülen des Spülguts kann Frischwasser FW verwendet werden, welches von einer Wasserversorgungseinrichtung 11, beispielsweise einem Wasserversorgungsnetz, aufgenommen und in die Spülkammer 4 geleitet werden kann. Hierzu wird das Frischwasser FW zunächst in einen Wasserbehälter 12 geleitet. Dieser ist hier im Ausführungsbeispiel an der Rückwand des Spülbehälters 2 angebracht. Zusätzlich oder unabhängig hiervon kann er zweckmäßigerweise an einer der beiden Seitenwände der Geschirrspülmaschine (bei Blickrichtung der Geschirrspülmaschine von vorne) angeordnet sein. Das Frischwasser FW kann durch diesen Wasserbehälter 12 direkt hindurchlaufen und in den Innenraum bzw. die Spülkammer 4 des Spülbehälters 2 hineinlaufen, wenn ein Ablaufventil 13 an seinem Ausgang oder in einer mit diesem verbundenen Auslaufleitung geöffnet ist. Das Frischwasser FW kann also den Wasserbehälter 12 durchströmend als Spülflotte über das Ablaufventil 13 und einen Wassereinlass 14 in die Spülkammer 4 eingelassen werden. Dieses Ablaufventil 13 kann beispielsweise als elektrisch schaltbares Ventil ausgebildet sein. Das in die Spülkammer 4 eingelassene Spülwasser S sammelt sich in einem Sumpf bzw. topfförmigen Sammelbehälter 15 (sogenannter Pumpensumpf), der am Boden des Spülbehälters 2 vorgesehen ist. Ist das Ablaufventil 13 geschlossen, so kann das aus der Wasserversorgungseinrichtung 11 einlaufende Frischwasser im Wasserbehälter 12 gesammelt werden.

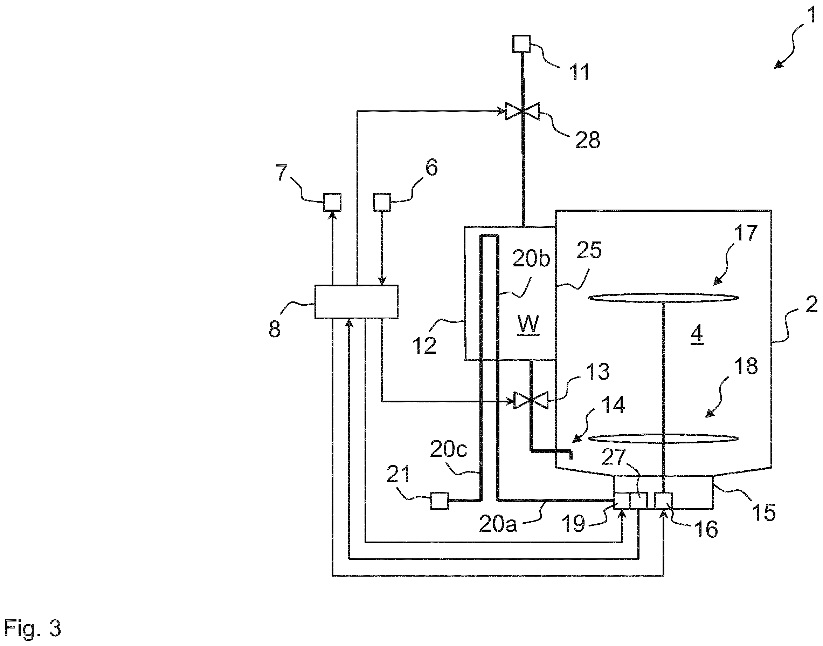

In der Zuleitung zwischen der Wasserversorgungseinrichtung 11 und dem Wasserbehälter 12 kann ein Einlaufventil eingefügt sein. Dieses ist hier in Figur 1 der Übersichtlichkeit halber weggelassen worden (siehe das Einlaufventil 28 in der Figur 3). Es kann insbesondere mittels der Steuereinrichtung 8 über eine Steuerleitung (hier in Figur 1 weggelassen) geöffnet und geschlossen werden.

Unterhalb des Sammelbehälters 15 ist eine Heizpumpe 16 vorgesehen, welche eine Umwälzpumpe 16 und eine Heizeinrichtung 16 umfasst. Eingangsseitig ist die Umwälzpumpe 16 mit dem Sammelbehälter 15 verbunden, und ausgangsseitig ist die Umwälzpumpe 16 mit einer Sprüheinrichtung verbunden. Die Sprüheinrichtung umfasst einen oberen rotierbaren Sprüharm 17 sowie einen unteren rotierbaren Sprüharm 18. Bei eingeschalteter Umwälzpumpe 16 gelangt das Spülwasser S in die Sprüharme 17 und 18 und wird von diesen ausgestoßen. Hierdurch werden die Sprüharme 17 und 18 in Rotation versetzt und das Spülwasser S wird in der Spülkammer 4 und auf das darin vorgesehene Spülgut verteilt. Anschließend fließt das Spülwasser S zurück in den Sammelbehälter 15.

Nach Abschluss eines Spülprogramms wird die Umwälzpumpe 16 abgestellt, und das im Sammelbehälter 15 gesammelte Spülwasser wird als Abwasser AW mit Hilfe einer Laugen- bzw. Abwasserpumpe 19 abgepumpt. Das Abwasser AW wird von der Laugenpumpe 19 über eine Abflussrohrleitung 20 zu einer Abwasserentsorgungseinrichtung 21 gepumpt. Die Abwasserentsorgungseinrichtung 21 kann beispielsweise ein Abwasserrohr einer gebäudeseitigen Wasserinstallation sein.

Die Abflussrohrleitung 20 umfasst (in Abpumprichtung betrachtet) einen zwischen dem Ausgang der Laugenpumpe 19 und Einlass bzw. Eingang des Wasserbehälters 12 angeordneten Abschnitt 20a, einen im Wasserbehälter 12 angeordneten Abschnitt 20b und einen zwischen dem Wasserbehälter 12 und der Abwasserentsorgungseinrichtung 22 angeordneten Abschnitt 20c. Der Abschnitt 20b liegt bei vollständig gefülltem Wasserbehälter 12 im Wasser des Wasserbehälters.

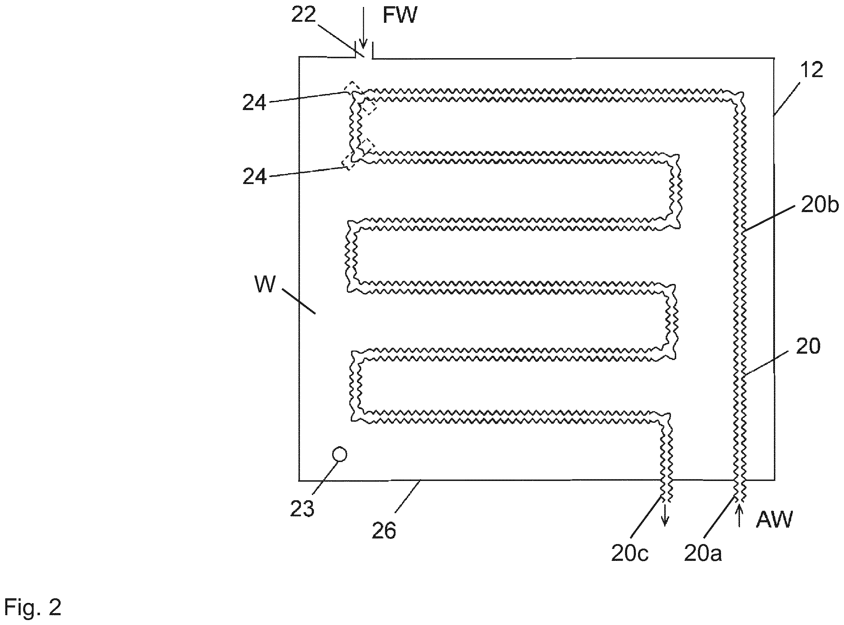

Figur 2 zeigt eine schematische Schnittansicht des Wasserbehälters 12 sowie einen beispielhaften Verlauf der Abflussrohrleitung 20 durch den Wasserbehälter 12. Die Ansicht ergibt sich bei einem Schnitt in einer Ebene parallel zur Wandfläche des Spülbehälters, an der der Wasserbehälter montiert ist, und wenn senkrecht zu derjenigen Wandfläche des Wasserbehälters 12 geblickt wird, die etwa parallel zur Montagewand des Spülbehälters verläuft, an der der Wasserbehälter angebracht ist. Der Wasserbehälter 12 kann räumlich betrachtet beispielsweise flach quaderförmig ausgebildet sein, mit einer Höhe von etwa 50 cm, einer Breite von etwa 50 cm und einer räumlichen Tiefe von etwa 3 cm. Der Wasserbehälter 12 kann aus Kunststoff, z. B. aus Polypropylen, oder aus Metall gefertigt sein. Frischwasser FW wird durch eine obere Öffnung 22 in den Wasserbehälter 12 geführt und kann durch eine untere Öffnung 23 über das Zulaufventil 13 dem Spülbehälter 2 zugeführt werden. Im dargestellten Beispiel verläuft die Abflussrohrleitung 20 von der Laugenpumpe 19 zunächst zu einem Ort unterhalb des Wasserbehälters 12, tritt am Boden (bzw. einer unteren Wandung) 26 des Wasserbehälters 12 in diesen ein, ist mäandernd durch den Wasserbehälter 12 geführt, tritt am Boden 26 des Wasserbehälters 12 wieder aus diesem heraus, und ist durch eine Öffnung im Gehäuse 5 mit der Abwasserentsorgungseinrichtung 21 verbunden. Das durch den Wasserbehälter 12 hindurchlaufende oder im Wasserbehälter 12 gesammelte Frischwasser FW hat typischerweise eine Temperatur von 5° C bis 25° C. Wenn dieses aus dem Wasserbehälter 12 über das Ablaufventil 13 und den Wassereinlass 14 in den Spülbehälter 2 und/oder das Flüssigkeitssystem der Geschirrspülmaschine eingelassen worden ist, kann es dort mittels der Heizeinrichtung der Heizpumpe 16 je nach Spülprogramm auf eine gewünschte Temperatur beispielsweise von 50° C bis 75° C erwärmt bzw. erhitzt werden. Dementsprechend kann auch das durch die Abflussrohrleitung 20 geführte Abwasser AW beim Abpumpen eine Temperatur von beispielsweise 50° C bis 75° C haben.. Dabei erfolgt das Abpumpen vorzugsweise am Ende oder nach dem Ende des wasserführenden Teilspülgangs. Das in der Abflussrohrleitung 20 durch den Wasserbehälter 12 geführte Abwasser AW erwärmt nun im Wasserbehälter 12 für den nächsten durch Schleießen des Ablaufventils 13 bereitgehaltenes, gespeichertes Frischwasser FW oder anderes bevorratetes Wasser, so dass der Wasserbehälter 12 als Wärmetauscher wirkt. Somit kann die Heizeinrichtung zum Aufheizen von Frischwasser FW, das im Wasserbehälter zwischengespeichert wird, mit geringerem Energieeinsatz betrieben werden, so dass Energie gespart werden kann.

Im dargestellten Beispiel steigt die Abflussrohrleitung 20 im Wasserbehälter 12 eingangsseitig zunächst vom Boden, also von einem unteren Teil des Wasserbehälters 12, insbesondere im Wesentlichen senkrecht (beispielsweise mit einem Winkel kleiner als 20° gegenüber der Vertikalen), nach oben bis nahe an die Decke, also einem oberen Teil des Wasserbehälters 12. Somit wird der eingangsseitig höhere Druck durch die Laugenpumpe 19 im Abwasser AW optimal genutzt. Vom höchsten Punkt innerhalb des Wasserbehälters 12 ist die Abflussrohrleitung 20 in mehreren Schleifen mäandernd wieder nach unten in Richtung zum Boden 26 des Wasserbehälters 12 geführt. Somit wird eine Vergrößerung der Fläche der Abflussrohrleitung 20 erreicht, die einen höheren Wirkungsgrad des Wärmetauschers bewirkt. Die Abflussrohrleitung 20 kann dabei vorzugsweise durch mehrere, in der Darstellung der Figur 2 lediglich in der linken oberen Ecke angedeutete, Clipse 24 oder sonstige Befestigungsmittel an einer Wandung des Wasserbehälters 12 fixiert werden. Die Abflussrohrleitung 20 kann auch in anderer Weise durch den Wasserbehälter 12 hindurch geführt sein. Zum Beispiel kann die Abflussrohrleitung 20 mäandernd vom Boden zur Decke des Wasserbehälters 12 geführt sein.

In einer bevorzugten Ausführungsform ist die Abflussrohrleitung 20 als Wellschlauch 20 ausgebildet. Unter einem Wellschlauch 20 ist hierbei ein Schlauch zu verstehen, dessen Wandung eine Wellenform aufweist. Auf diese Weise wird eine Vergrößerung der Oberfläche der Abflussrohrleitung 20 erreicht, die eine schnelle Wärmeübertragung und einen höheren Wirkungsgrad des Wärmetauschers bewirkt. Die Wellenperiode kann beispielsweise 2 - 5 mm betragen. Bevorzugt ist eine Wellenperiode von etwa 3 mm. In den Wellentälern des Wellschlauchs, also den Abschnitten der gewellten Abflussrohrleitung 20 mit dem geringsten Außendurchmesser, kann der Außendurchmesser der Abflussrohrleitung 20 beispielsweise 10 - 16 mm, vorzugsweise 12 - 14 mm betragen. An den Wellenbergen, also den Abschnitten der gewellten Abflussrohrleitung 20 mit dem höchsten Außendurchmesser, kann der Außendurchmesser der Abflussrohrleitung 20 beispielsweise 16 - 24 mm, vorzugsweise 18 - 22 mm betragen. Die Wanddicke der Abflussrohrleitung 20 ist nicht dicker als 1 mm, und vorzugsweise nicht dicker als 0,5 mm. Bei einer solch dünnen Wandstärke kann eine schnelle Wärmeübertragung und ein hoher Wirkungsgrad des Wärmetauschers bewirkt werden.

Ein solcher Wellschlauch 20 kann kostengünstig aus Kunststoff, wie z. B. Polypropylen oder dergleichen, hergestellt sein. Beispielsweise ist eine kostengünstige Fertigung durch Extrusion mit Hilfe eines Korrugators möglich, was eine einfache Einstellung der Wellenform sowie der Wanddicke ermöglicht. Es ist jedoch auch möglich, die Abflussrohrleitung 20 aus einem anderen Material zu fertigen, beispielsweise aus Metall, wie z. B. Aluminium oder Kupfer. Mit einem metallischen Material können gute Wärmetauschereigenschaften erzielt werden. Kunststoff ist nicht nur chemisch widerstandfähig gegenüber der abgepumpten Lauge, sondern auch kostengünstig zu fertigen. Ferner kann ein Kunststoffwellschlauch 20 aufgrund seiner hohen Flexibilität einfach als Abflussrohrleitung 20, insbesondere in Mäanderform im Wasserbehälter 12 montiert werden.

Im dargestellten Beispiel ist die Abflussrohrleitung 20 einstückig ausgebildet. Damit ist lediglich ein durchgehender Wellschlauch 20 als Abflussrohrleitung 20 zwischen der Laugenpumpe 19 und der Abwasserentsorgungseinrichtung 21 vorgesehen. Somit müssen keine zusätzlichen Dichtstellen oder Kopplungsstücke in der Abflussrohrleitung 20 vorgesehen werden. Ferner kann somit die Abflussrohrleitung 20 bereits vor der Montage im Wasserbehälter 12 auf Dichtigkeit geprüft werden. Alternativ dazu ist es aber auch möglich, die Abflussrohrleitung 20 im Wasserbehälter 12 zu montieren und mit einem eingangsseitigen Anschlussstutzen und einem ausgangsseitigen Anschlussstutzen oder dergleichen zu versehen, welche mit Leitungen zur Laugenpumpe 19 bzw. der Abwasserentsorgungseinrichtung 21 verbunden werden können. Dies ermöglicht eine modulare Ausführung des Wasserbehälters 12.

Der Wasserbehälter 12 steht in wärmeleitender Verbindung mit dem Spülbehälter 2 stehen. Beispielsweise kann eine vom Gehäuse 5 abgewandte Seitenwand, d.h. die dem Spülbehälter zugewandte Seitenwand des Wasserbehälters 12 in im Wesentlichen flächiger Verbindung mit einem Wandabschnitt 25 des Spülbehälters 2 stehen, oder mit einer dünnen Schicht Bitumen oder dergleichen von z. B. 2 mm Dicke an diesem fixiert sein. Eine solche wärmeleitende Verbindung zwischen Spülbehälter 2 und Wasserbehälter 12 bewirkt, dass die Erwärmung des Spülbehälters 2 durch das Spülwasser S zum Wärmetausch genutzt wird und Frischwasser FW, das im Wasserbehälter 12 durch Schließen des Ablaufventils 13 für seine Verwendung in mindestens einem nachfolgenden flüssigkeitsführenden Teilspülgang bevorratet wird, erwärmt wird. Zudem kann so der Wandabschnitt 25 des Spülbehälters 2 durch Einfüllen eines Kaltwasservolumens in den Wasserbehälter 12 gekühlt werden, so dass der Wandabschnitt 25 als Kondensationsfläche 25 für im Spülbehälter 2 befindliche Feuchtigkeit wirkt, was insbesondere zur Verbesserung der Trocknungswirkung eines Trocknungsschrittes dienen kann.

Figur 3 zeigt ein Funktionsdiagramm der Geschirrspülmaschine der Figur 1. Die Bedieneinrichtung 6 ist dabei zur Übertragung von Bedienbefehlen mit der Steuereinrichtung 8 verbunden. Weiterhin ist die Anzeigeeinrichtung 7 zum Empfang von Statusinformationen mit der Steuereinrichtung 8 verbunden.

Das Ablaufventil 13 ist so mit der Steuereinrichtung 8 verbunden, dass die Steuereinrichtung 8 das Beschicken der Spülkammer 4 mit Wasser aus dem Wasserbehälter 12 in Abhängigkeit von einem ausgewählten Spülprogramm steuern kann.

Weiterhin ist die Heizpumpe 16 so mit der Steuereinrichtung 8 verbunden, dass die Umwälzpumpe der Heizpumpe 16 und die Heizeinrichtung der Heizpumpe 16 durch die Steuereinrichtung 8 steuerbar und/oder regelbar sind. Bei der Heizpumpe 16 ist sowohl die Heizfunktion als auch die Pumpfunktion durch die Steuereinrichtung 2 individuell steuer- und/oder regelbar. Hierdurch ist es möglich, in der Spülkammer 4 angeordnetes Spülgut während eines Spülgangs mit Wasser zu beaufschlagen, welches gegebenenfalls beheizt ist.

Weiterhin ist die Steuereinrichtung 8 auch mit der Laugenpumpe 19 zu deren Steuerung und/oder Regelungverbunden. Der Laugenpumpe 19 ist zudem eine Leistungserkennungseinrichtung 27 zugeordnet, welche zur Erfassung der Leistungsaufnahme der Laugenpumpe 19 ausgebildet ist. Die Leistungserkennungseinrichtung 27 ist mit der Steuereinrichtung 8 zur Übertragung von Leistungsmesswerten verbunden, wobei die Steuereinrichtung 8 zur Steuerung und/oder Regelung, oder verallgemeindert betrachtet zur Kontrolle der Menge abzupumpenden Abwassers AW anhand der Leistungsmesswerte ausgebildet ist. Die Förderleistung sowie der damit einhergehende Mengendurchsatz der Laugenpumpe 19 korrespondiert mit der Fördergeschwindigkeit der Laugenpumpe 19. Aus der abgelaufenen Zeit im Förderbetrieb der Laugenpumpe und der erfassten Förderleistung ergibt sich das jeweilig abgepumpte Volumen. Die Leistungserkennungseinrichtung 27 kann zur Ermittlung der Förderleistung der Laugenpumpe 19 deren elektrische Leistungsaufnahme, beispielsweise durch Strom- und/oder Spannungsmessung, erfassen. Auf diese Weise kann die jeweils abzupumpende Menge an Abwasser AW exakt eingehalten werden, ohne dass es hierzu eines separaten Sensors, beispielsweise eines Durchflussmengensensors, wie etwa einem Flügelradsensor, bedarf.

Um den Wasseraustausch zwischen der externen Wasserversorgungseinrichtung 11, dem Wasserbehälter 12 und dem Spülbehälter 2 durch die Steuereinrichtung 8 in Abhängigkeit von einem ausgewählten Spülprogramm steuern und/oder regeln zu können, ist eine Ventilanordnung 13, 28 vorgesehen, welche das Ablaufventil 13 und ein Frischwasserventil 28 umfasst. Das Ablaufventil 13 ist so mit der Steuereinrichtung 8 verbunden, dass die Steuereinrichtung 8 das Beschicken der Spülkammer 4 mit Wasser aus dem Wasserbehälter 12 in Abhängigkeit von einem ausgewählten Spülprogramm steuern und/oder regeln kann.

Weiterhin ist zwischen der Wasserversorgungseinrichtung 11 und dem Wasserbehälter 12 ein Frischwasserventil 28 vorgesehen, welches mit der Steuereinrichtung 8 so verbunden ist, dass der Zulauf von Frischwasser FW in den Behälter 12 durch die Steuereinrichtung 8 in Abhängigkeit von dem Spülprogramm steuerbar und/oder regelbar ist.

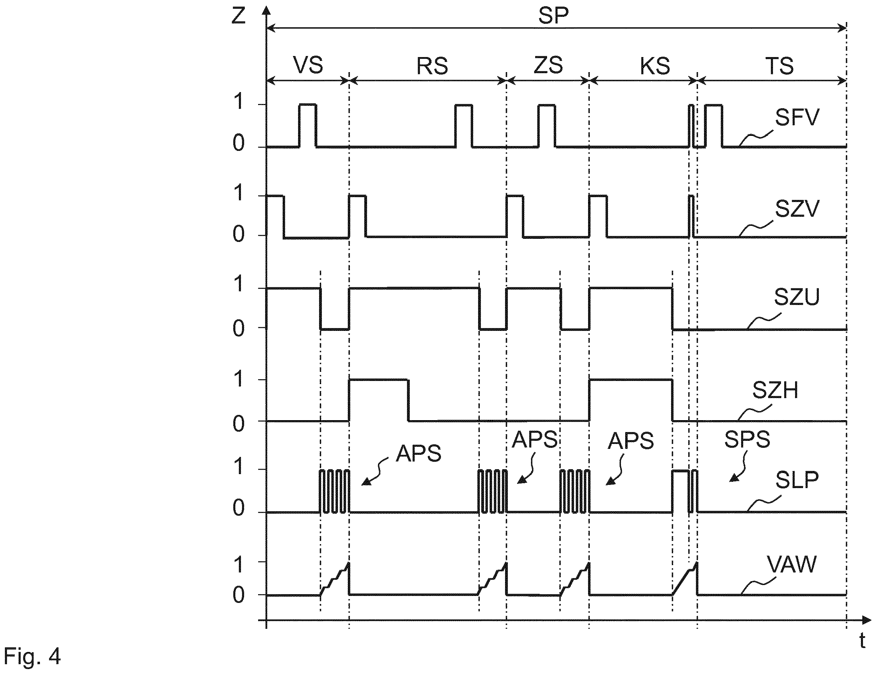

Figur 4 zeigt ein Funktionsdiagramm zur Erläuterung der Funktion der erfindungsgemäßen Geschirrspülmaschine 1 der Figuren 1 bis 3. Hierzu ist der Ablauf eines beispielhaften Spülprogramms SP dargestellt.

In Figur 4 sind auf einer gemeinsamen Zeitachse t die Kurven SFV, SZV, SZU, SZH, SLP und VAW dargestellt, welche Schalt- bzw. Betriebszustände von Komponenten der Geschirrspülmaschine 1 auf der Hochachse Z anzeigen.

Die Kurve SFV repräsentiert den Schaltzustand des Frischwasserventils 28 der Geschirrspülmaschine 1. Der Schaltzustand "0" entspricht dabei einem geschlossenen Frischwasserventil 28, der Schaltzustand "1" einem geöffneten Frischwasserventil 28.

Die Kurve SZV repräsentiert dabei den Schaltzustand des Ablaufventils 13 des Wasserbehälters der Geschirrspülmaschine 1. Der Schaltzustand "0" entspricht dabei einem geschlossenen Ventil 13, der Schaltzustand "1" einem geöffneten Ablaufventil 13.

Die Kurve SZU zeigt den Schaltzustand der Umwälzpumpe der Heizpumpe 16 und die Kurve SZH den Schaltzustand der Heizeinrichtung der Heizpumpe 16. Der Schaltzustand "0" entspricht dabei jeweils einer ausgeschalteten Umwälzpumpe bzw. Heizeinrichtung, der Schaltzustand "1" einer eingeschalteten Umwälzpumpe bzw. Heizeinrichtung.

Weiterhin zeigt die Kurve SLP den Schaltzustand der Abwasserpumpe 19 der Geschirrspülmaschine 1. Der Schaltzustand "0" entspricht dabei einer abgeschalteten Abwasserpumpe 19, der Schaltzustand "1" einer eingeschalteten Abwasserpumpe 19.

Die Kurve VAW symbolisiert das Volumen des abgepumpten Abwassers AW eines Programmschritts VS, RS, ZS, KS in einer relativen Darstellung. Der Zustand "0" bedeutet dabei, dass noch kein Abwasser abgepumpt ist, und der Zustand "1", dass das Abwasser eines Programmschritts VS, RS, ZS, KS im Wesentlichen vollständig abgepumpt ist.

In Figur 4 ist beispielhaft der Spülgang eines Spülprogramms SP dargestellt, welches zum Spülen von Spülgut unter Verwendung von Spülwasser S in dieser zeitlichen Reihenfolge einen Vorspülschritt VS, einen Reinigungsschritt RS, einen Zwischenspülschritt ZS und einen Klarspülschritt KS umfasst. Daran schließt sich ein Spülgang-abschließender Trocknungsschritt TS zum Trocknen des gereinigten Spülguts an. In anderen Beispielen könnten einer oder mehrere dieser Programmschritte VS, RS, ZS, KS ausgeblendet bzw. weggelassen sein. Auch wären Beispiele möglich, bei denen einer oder mehrere Programmschritte VS, RS, ZS, KS mehrfach durchlaufen werden.

Der zunächst durchgeführte Vorspülschritt VS dient der Entfernung von gröberen Verschmutzungen vom Geschirr, um so den Reinigungsschritt RS vorzubereiten. Hierzu wird zu Beginn des Vorspülschritts VS das Ablaufventil 13 geöffnet, so dass zuvor bevorratetes Wasser W aus dem Wasserbehälter 12 über den Wassereinlass 14 in die Spülkammer 4 gelangt. Wenn der Wasserbehälter 12 unbefüllt ist, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn der Wasserbehälter 12 mit Frischwasser vorbefüllt ist, das vorteilhafterweise z.B. am Ende des Klarspülschritts und/oder zu Beginn des Trocknungsschritts des vorausgehenden Spülgangs zur Bereitstellung einer den Trocknungsschritt unterstützenden Kondensationskühlungsfläche durch Öffnen des Einlaufventils 28 eingelassen und aufgrund des geschlossenen Ablaufventils 13 im Wasserbehälter 12 gespeichert worden ist, kann diese gespeicherte Wassermenge jetzt für den Vorspülschritt VZ durch Öffnen des Ablaufventils 13 in die Spülkammer 4 einlaufen. Reicht die gespeicherte Wassermenge des Wasserbehälters 12 für den Vorspülgang aus, so kann das Frischwasserventil 28 geschlossen bleiben (nur das Ablaufventil 13 ist dann geöffnet). Andernfalls, d.h. wenn die in ihm gespeicherte Wassermenge nicht für die Durchführung des Vorspülschritts VS ausreicht, wird zusätzlich das Frischwasserventil 28 geöffnet. Wenn die Spülkammer 4 mit einer für den Vorspülschritt VS ausreichenden Menge von Wasser aus dem Wasserbehälter 12 und/oder der Frischwasserversorgungseinrichtung 11 beschickt ist, wird/werden das Ablaufventil 13 und/oder Frischwasserventil 28 wieder geschlossen. Der Wasserbehälter 12 kann nun ggf. - in nicht gezeigter Weise - durch Schließen des Ablaufventils 13 und durch Öffnen des Frischwasserventils 28 mit Frischwasser FW neu befüllt werden. Das dem Spülbehälter 2 zugeführte Wasser wird als Spülwasser S in der Spülkammer 4 mittels der Umwälzpumpe der Heizpumpe 16 für eine vorgegebene Zeit, im Regelfall ohne - im Ausnahmefall mit Zuschaltung - ihrer Heizeinrichtung, umgewälzt, um so das Spülgut mit Spülwasser S zu beaufschlagen. Danach wird das nunmehr verschmutzte Spülwasser S als Abwasser AW mittels der Laugenpumpe 19 in einer Abpumpsequenz APS nach außen abgepumpt.

Der im Anschluss an den Vorspülschritt VS durchgeführte Reinigungsschritt RS dient der gründlichen Reinigung des Spülguts. Hierzu wird zu Beginn des Reinigungsschritts RS das Ablaufventil 13 geöffnet, so dass im vorausgehenden Vorspülschritt VS, insbesondere am Ende des Vorspülschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Reinigungsschritt RS ggf. ausreichen. Wenn der Wasserbehälter 12 unbefüllt ist oder die in ihm gespeicherte Wassermenge nicht für die Durchführung des Reinigungsschritts RS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Reinigungsschritt RS ausreichenden Menge von Wasser W aus dem Wasserbehälter 12 beschickt ist, wird das Ablaufventil 13 wieder geschlossen. Der Wasserbehälter 12 kann dann erneut durch Öffnen des Frischwasserventils 28 mit Frischwasser FW befüllt werden. Während des Reinigungsschritts RS ist es in aller Regel erforderlich, das Spülgut mit Spülwasser S zu beaufschlagen, welches eine vergleichsweise hohe Temperatur aufweist, um so eine hohe thermische Reinigungswirkung zu erzielen. Zudem wird dem Spülwasser S im Allgemeinen Reinigungsmittel zugesetzt, dessen chemische Reinigungswirkung bei höherer Temperatur am besten ist. Üblicherweise ist daher für einen Reinigungsschritt RS eine Temperatur von ca. 50° C bis 70° C vorgesehen, so dass die für den Reinigungsschritt RS gewünschte Temperatur erreicht wird. Dazu wird das Wasser im Spülbehälter 2 und/oder Flüssigkeitssystem der Geschirrspülmaschine mittels der Heizeinrichtung der Heizpumpe 16 aufgeheizt. Das Wasser W wird nun als Spülwasser S in der Spülkammer 4 mittels der Umwälzpumpe der Heizpumpe 16 für eine vorgegebene Zeit, im Regelfall mit Zuschaltung ihrer Heizeinrichtung, umgewälzt, um so das Spülgut mit warmem Spülwasser S zu beaufschlagen. Zum Abschluss des Reinigungsschritts RS wird das nunmehr verschmutzte Spülwasser S mittels der Laugenpumpe 19 in einer erneuten Abpumpsequenz APS als Abwasser AW nach außen abgepumpt.

Der nunmehr nachfolgend durchgeführte Zwischenspülschritt ZS zum Entfernen von Reinigungsmittel vom Spülgut nach dem Reinigungsschritt RS sieht eine erneute Beschickung der Spülkammer 4 mit Wasser W aus dem Wasserbehälter 12 vor, um das Spülgut mit sauberem Spülwasser S beaufschlagen zu können. Hierzu wird zu Beginn des Zwischenspülschritts ZS das Ablaufventil 13 geöffnet, so dass im dem Zwischenspülschritt ZS vorausgehenden Reinigungsschritt RS, insbesondere am Ende des Reinigungsschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Zwischenspülschritt ZS ggf. ausreichen. Wenn der Wasserbehälter 12 unbefüllt ist oder die in ihm gespeicherte Wassermenge nicht für die Durchführung des Zwischenspülschritts ZS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Zwischenspülschritt RS ausreichenden Menge von Wasser W aus dem Wasserbehälter 12 beschickt ist, wird das Ablaufventil 13 wieder geschlossen. Der Wasserbehälter 12 kann nun erneut durch Öffnen des Frischwasserventils 28 mit Frischwasser FW befüllt werden. Das Wasser W wird als Spülwasser S mittels der Heizpumpe 16 für eine vorgegebene Zeit umgewälzt, wobei im Regelfall ein Zuschalten der Heizeinrichtung 16 der Umwälzpumpe 16 unterbleiben kann. Danach wird das nunmehr verschmutzte Wasser mittels der Laugenpumpe 19 in einer weiteren Abpumpsequenz APS als Abwasser AW nach außen abgepumpt.

Der nun nachfolgende Klarspülschritt KS dient insbesondere der Vermeidung von Flecken auf dem Spülgut, welche durch gelöste Stoffe im Spülwasser S, wie beispielsweise Salz und/oder Kalk, entstehen könnten. Hierzu wird das Spülwasser S während des Klarspülschritts KS mit Klarspüler versetzt. Bei einer Geschirrspülmaschine mit einer sogenannten Eigenwärmetrocknung besteht eine weitere Aufgabe des Klarspülschritts KS darin, den nachfolgenden Trocknungsschritt TS vorzubereiten. Dabei wird das Spülgut während des Klarspülschritts KS auf eine hohe Temperatur aufgeheizt. Im abschließenden Trocknungsschritt TS verdunsten am heißen Spülgut anhaftende Wassertropfen und schlagen sich an der Innenseite des Spülbehälters 4 aufgrund der dort gegenüber der Temperatur der Luft herrschenden niedrigeren Temperatur ab. Zu Beginn des Klarspülschritts KS wird zunächst das Ablaufventil 13 geöffnet; so dass im vorausgehenden Zwischenspülschritt ZS, insbesondere am Ende des Zwischenspülschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Klarspülschritt KS ggf. ausreichen. Wenn der Wasserbehälter 12 unbefüllt ist, oder die in ihm gespeicherte Wassermenge nicht für die Durchführung des Klarspülschritts KS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Klarspülschritt KS ausreichenden Menge von Wasser W aus dem Wasserbehälter 12 beschickt ist, wird das Ablaufventil 13 wieder geschlossen. Der Wasserbehälter 12 kann nun erneut durch Öffnen des Frischwasserventils 28 mit Frischwasser FW befüllt werden. Das Wasser W wird nun als Spülwasser S mittels der Heizpumpe 16 für eine vorgegebene Zeit umgewälzt, wobei im Regelfall ein Zuschalten der Heizeinrichtung 16 der Heizpumpe 16 erforderlich ist. Zum Ende des Klarspülschritts KS wird das nunmehr verschmutzte Spülwasser S in einer Schlusspumpsequenz SPS als Abwasser AW nach außen abgepumpt.

Da die Abflussrohrleitung 20 durch den Wasserbehälter 12 hindurchgeführt ist, entzieht das etwaig im Wasserbehälter 12 für eine spätere Verwendung bevorratete Wasser W dem abgepumpten Abwasser AW während jeder der Abpumpsequenzen APS Wärmeenergie, so dass grundsätzlich weniger Energie für die Erwärmung des Wassers W, insbesondere bei Verwendung in einem der beheizten Programmschritte aufgebracht werden muss.

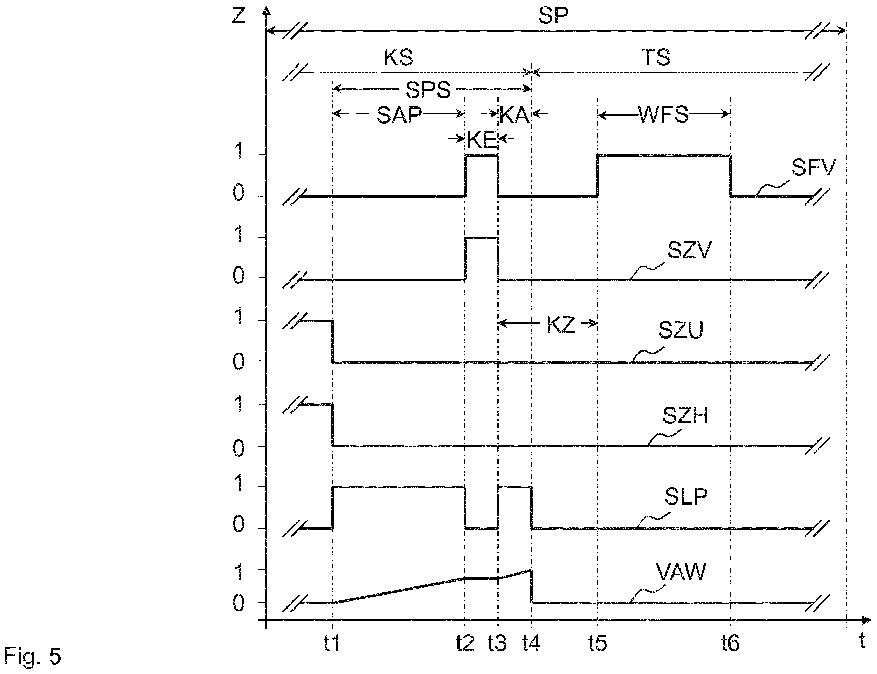

Figur 5 zeigt eine Detaildarstellung des Spülprogramms SP der Figur 4. Erfindungsgemäß ist vorgesehen, dass das Spülprogramm SP so ausgebildet ist, dass am Ende eines Klarspülschritts KS eine Schlusspumpsequenz SPS vorgesehen ist, welche einen Spülwasserabpumpschritt SAP zum Abpumpen eines während des Klarspülschritts KS zum Beaufschlagen von Spülgut verwendeten Spülwassers S als Abwasser AW mittels der Laugenpumpe 19, nachfolgend einen Kaltwassereinfüllschritt KE zum Einfüllen eines Kaltwasservolumens in den Spülbehälter 2 mittels der Ventilanordnung 13, 28 und schließlich einen Kaltwasserabpumpschritt KA zum Abpumpen des während des Kaltwassereinfüllschritts KE eingefüllten Kaltwasservolumens mittels der Laugenpumpe 19 als Abwasser AW umfasst.

Die beispielhaft dargestellte Schlusspumpsequenz SPS beginnt zum Zeitpunkt t1, unmittelbar nachdem die Endtemperatur des Klarspülschritts KS erreicht ist und die Umwälzpumpe und die Heizeinrichtung abgeschaltet worden sind.

Zunächst wird im Rahmen der Schlusspumpsequenz SPS der Spülwasserabpumpschritt SAP zum Abpumpen eines während des Klarspülschritts KS zum Beaufschlagen von Spülgut verwendeten Spülwassers S als Abwasser AW durchgeführt. Der Spülwasserabpumpschritt beginnt zum Zeitpunkt t1 mit dem Einschalten der Laugenpumpe 19 und endet zum Zeitpunkt t2 mit dem Ausschalten der Laugenpumpe 19. Durch den Spülwasserabpumpschritt SAP wird das in der Regel sehr heiße Spülwasser S des Klarspülschritts KS aus dem Spülbehälter nach Außen abgepumpt, so dass sich der Spülbehälter 2 schneller als ein mit dem heißen Klarspülwasser befüllter Spülbehälter 2, insbesondere durch Wärmeleitung und Wärmestrahlung, abkühlen kann.

Weiterhin wird im Rahmen der Schlusspumpsequenz SPS der Kaltwassereinfüllschritt KE zum Einfüllen eines Kaltwasservolumens in den Spülbehälter 2 durchgeführt. Hierzu wird zum Zeitpunkt t2 sowohl das Frischwasserventil 28 als auch das Ablaufventil 13 geöffnet, so dass ohne wesentlichen Zeitverzug kaltes Frischwasser FW in den Spülbehälter 2 gelangt. Indem nun dieses aus Frischwasser bestehende Kaltwasservolumen in den Spül-behälter 2 eingefüllt wird, kühlt der Spülbehälter 2 weiter ab. Der Begriff Kaltwasservolumen bezieht sich dabei auf eine vorbestimmte Menge an Wasser, welche eine niedrigere Temperatur als das zuvor abgepumpte Spülwasser S des Klarspülschritts KS aufweist. Bei dem Kaltwasservolumen handelt es sich im Ausführungsbeispiel um Frischwasser FW, es könnte aber auch im Wasserbehälter 12 bevorratetes Wasser W verwendet werden. Zum Zeitpunkt t3 werden das Frischwasserventil 28 und auch das Ablaufventil 13 geschlossen, so dass der Kaltwassereinfüllschritt KE beendet ist.

Zum Abschluss der Schlusspumpsequenz SPS wird dann der Kaltwasserabpumpschritt KA zum Abpumpen des während des Kaltwassereinfüllschritts KE eingefüllten Kaltwasservolumens durchgeführt. Hierbei wird zum Zeitpunkt t3 die Laugenpumpe 19 eingeschaltet und zum Zeitpunkt t4 wieder ausgeschaltet.

Indem nun im Kaltwasserabpumpschritt KA das Kaltwasservolumen abgepumpt wird, wird auch die Abflussrohrleitung 20, welche zuvor beim Abpumpen der heißen Spülflüssigkeit S erwärmt wurde, abgekühlt. Auf diese Weise sinkt auch die Temperatur im Wasserbehälter 12. Im Ergebnis steht nun nach Abschluss der Schlusspumpsequenz SPS eine Geschirrspülmaschine 1 mit einem vorgekühlten Spülbehälter 2 und einem vorgekühlten Wasserbehälter 12 bereit, so dass insbesondere die dem Wasserbehälter 12 benachbarte Kondensationsfläche 25 eine niedrigere Temperatur aufweist als bei einer Abpumpsequenz, die lediglich das Abpumpen des Spülwassers S des Klarspülschrittes KS vorsieht. Hierdurch kann im nachfolgenden Trocknungsschritt TS eine verbesserte Kondensierung der im Spülbehälter 2 befindlichen Feuchtigkeit bewirkt werden, was letztlich das Trocknungsergebnis ohne wesentlichen zusätzlichen Zeit- und/oder Energiebedarf verbessert.

Bevorzugt ist das Spülprogramm SP so ausgebildet, dass das Abpumpen des während des Klarspülschritts KS zum Beaufschlagen von Spülgut verwendeten Spülwassers S als Abwasser AW mittels der Laugenpumpe 19 während des Spülwasserabpumpschritts SAP kontinuierlich erfolgt. Unter kontinuierlichem Abpumpen wird dabei verstanden, dass ohne Pausen abgepumpt wird. Auf diese Weise kann eine Übertragung von Wärmeenergie vom Spülwasser S des Klarspülgangs KS auf die Abflussrohrleitung 20 und damit in den Wasserbehälter 12 minimiert werden.

Zweckmäßigerweise ist das Spülprogramm SP so ausgebildet, dass das Abpumpen des während des Klarspülschritts KS zum Beaufschlagen von Spülgut verwendeten Spülwassers S als Abwasser AW mittels der Laugenpumpe 19 während des Spülwasserabpumpschritts SAP so erfolgt, dass das während des Klarspülschritts KS zum Beaufschlagen von Spülgut verwendete Spülwasser S vollständig abgepumpt ist. Unter vollständigem Abpumpen wird dabei verstanden, dass allenfalls eine nicht abpumpbare Restmenge von Spülwasser S im Spülbehälter 2 verbleibt. Auf diese Weise wird die nach Außen transportierte Wärmemenge maximiert.

Bevorzugt ist das Spülprogramm SP so ausgebildet, dass das während des Kaltwassereinfüllschritts KE in den Spülbehälter 2 mittels der Ventilanordnung 13, 28 eingefüllte Kaltwasservolumen Frischwasser FW umfasst, welches insbesondere während des Kaltwassereinfüllschritts KE einer externen Wasserversorgungseinrichtung 11 entnommen ist.

Indem das Kaltwasservolumen zumindest teilweise, bevorzugt ausschließlich, aus während dem Kaltwassereinfüllschritt KE der externen Wasserversorgungseinrichtung 11 entnommenen Frischwasser FW besteht, weist das Kaltwasservolumen in der Regel eine besonders niedrige Temperatur auf, so dass der Spülbehälter 2 und der Wasserbehälter 12 besonders gut gekühlt werden.

Zweckmäßigerweise ist das Spülprogramm SP so ausgebildet, dass das Kaltwasservolumen, welches während des Kaltwassereinfüllschritts KE eingefüllt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen dem Ausgang der Laugenpumpe 19 und dem Eingang des Wasserbehälters 12 angeordneten Abschnitts 20a der Abflussrohrleitung 20 und eines im Wasserbehälter 12 angeordneten Abschnitts 20b der Abflussrohrleitung 20 beträgt. Das Innenvolumen des zwischen dem Ausgang der Laugenpumpe 19 und dem Eingang des Wasserbehälters 12 angeordneten Abschnitts 20a der Abflussrohrleitung 20 und des im Wasserbehälter 12 angeordneten Abschnitts 20b der Abflussrohrleitung 20 ist dabei jenes Volumen, welches das Abwasser AW in jenem Abschnitt 20a, 20b der Abwasserrohrleitung 20 einnehmen kann, der sich vom Ausgang der Laugenpumpe 19 bis zum Austritt der Abwasserrohrleitung 20 aus dem Wasserbehälter 12 erstreckt. Optimal kann die Abflussrohrleitung 20 dann abgekühlt werden, wenn in dem Kaltwasserabpumpschritt KA das genannte Innenvolumen der Abschnitte 20a und 20b der Abflussrohrleitung 20 mit dem Kaltwasservolumen gefüllt werden. Durch die Verwendung der angegebenen Mindestwerte und Maximalwerte für das Kaltwasservolumen kann dieses Ziel zumindest annähernd erreicht werden.

Bevorzugt ist das Spülprogramm SP so ausgebildet, dass der Spülwasserabpumpschritt SAP, der Kaltwassereinfüllschritt KE und der Kaltwasserabpumpschritt KA ohne zwischenzeitliche Pausen durchgeführt sind. Unter einer Durchführung ohne zwischenzeitliche Pausen wird dabei verstanden, dass der Spülwasserabpumpschritt SAP, der Kaltwassereinfüllschritt KE und der Kaltwasserabpumpschritt KA ohne eine wesentliche Unterbrechung des Programmablaufs, d.h. zusammenhängend bzw. in einem Stück durchgeführt werden. Auf diese Weise kann die Gesamtlaufzeit des Spülprogramms SP minimiert werden.

Zweckmäßigerweise ist das Spülprogramm SP so ausgebildet, dass der Spülwasserabpumpschritt SAP und der Kaltwassereinfüllschritt KE ohne zeitliche Überlappung durchgeführt sind. Hierunter wird verstanden, dass der Kaltwassereinfüllschritt KE frühestens beginnt, wenn der Spülwasserabpumpschritt SAP beendet ist. Auf diese Weise wird insbesondere vermieden, dass sich das zugeführte Kaltwasservolumen und das heiße Spülwasser S des Klarspülschritts KS vermischen, was zu einer verschlechterten Kühlung der Abflussrohrleitung 20 während des Kaltwasserabpumpschritts KA führen könnte. Vorzugsweise wird also der Kaltwassereinfüllschritt KE erst nach dem Ende des Spülwasserabpumpschritts SAP abgepumpt.

Bevorzugt ist das Spülprogramm SP so ausgebildet, dass erst nach dem Beginn des Kaltwasserabpumpschritts KA ein Wasserbehälterfüllschritt WFS zum Befüllen des Wasserbehälters 12 mit Frischwasser FW, welches insbesondere während des Wasserbehälterfüllschritts WFS einer externen Wasserversorgungseinrichtung 11 entnommen ist, durchgeführt ist. Hierzu wird zum Zeitpunkt t5 das Frischwasserventil 28 geöffnet und zum Zeitpunkt t6 wieder geschlossen. Auf diese Weise wird durch die wärmeleitende Verbindung zwischen dem Spülbehälter 2 und dem Wasserbehälter 12 durch das im Vergleich zum Spülwasser S des Klarspülschritts KS kalte Frischwasser FW wenigstens ein Teil des Spülbehälters 2 gekühlt, so dass eine Kondensationsfläche 25 für im Spülbehälter 2 befindliche Feuchtigkeit geschaffen wird. Hierdurch kann ein hervorragendes Trocknungsergebnis im Trocknungsschritt erreicht werden. Da zuvor insbesondere die Abflussrohrleitung 20 mittels des Kaltwasservolumens im Kaltwasserabpumpschritt KA gekühlt wurde, weist die Temperatur des Frischwassers FW im Wasserbehälter 12 im Wesentlichen denjenigen Wert auf, den sie auch hätte, wenn die Abflussrohrleitung 20 nicht durch den Wasserbehälter 12 geführt wäre. Auf diese Weise kann ein hervorragendes Trocknungsergebnis mit den Vorteilen der Wärmerückgewinnung kombiniert werden. Dabei ist es besonders vorteilhaft, wenn das Frischwasser FW erst während des Wasserbehälterfüllschritts WFS von der externen Wasserversorgungseinrichtung 11 aufgenommen wird, da es in diesem Fall eine besonders niedrige Temperatur aufweist. Grundsätzlich könnte aber auch bevorratetes Frischwasser verwendet werden.

Nach einer bevorzugten Weiterbildung der Erfindung ist das Spülprogramm SP so ausgebildet, dass zwischen dem Beginn des Kaltwasserabpumpschritts und dem Beginn des Wasserbehälterfüllschritts eine Kühlzeit zum Kühlen der Abflussrohrleitung 20 vorgesehen ist, welche wenigstens 30 s, bevorzugt 60 s, besonders bevorzugt wenigsten 90 s beträgt. Auf diese Weise kann eine ausreichende Kühlung insbesondere der Abflussrohrleitung 20 erzielt werden, bevor das Frischwasser FW in den Wasserbehälter 12 eingefüllt wird, so dass das Frischwasser FW durch die Abflussrohrleitung 20 allenfalls in geringem Maße erwärmt wird.

Zusammenfassend betrachtet ist somit insbesondere folgende Konstruktion und Funktionsweise einer Geschirrspülmaschine vorteilhaft: Durch einen im Wärmetauscher 12 verlegten Abwasserkanal bzw. Abflussrohrleitungsabschnitt 20 kann die im Abwasser AW enthaltene Wärmeenergie teilweise zurückgewonnen werden. Das Abwasser AW wärmt das im Wärmetauscher 12 bevorratete Wasser W auf, so dass sich das im nachfolgenden Bad RS, ZS, KS verwendete Wasser S auf einem höheren Temperaturniveau befindet als bei einem herkömmlichen Wärmetauscher 12. Weiterhin wird bei Geschirrspülgeräten 1 mit Wärmetauscher-Technologie in der Trocknungsphase TS der Wärmetauscher 12 mit Kaltwasser gefüllt, um so eine Kondensationsfläche 25 zu schaffen, was sich wiederum positiv auf das Gesamttrocknungsergebnis auswirkt.

Während des Abpumpvorgangs SAP der Klarspülflotte erwärmt sich der Abflussrohrleitungsabschnitt, insbesondere Ablaufschlauch 20 ebenfalls. Durch das höhere Temperaturniveau der Klarspülflotte wird das Temperaturniveau im Wärmetauscher 12 höher sein als im Vergleich zu den vorhergehenden Wärmetauscherfüllungen. Auf Grund der höheren Temperatur im Wärmetauscher 12 kann es zu einer Verschlechterung der Trocknungsleistung kommen. Dies resultiert primär aus der potentiell höheren Temperatur der Wärmetauscherfüllung und somit der Kondensationsfläche 25. Die Verfahrenstechnik im Übergang von der Klarspülphase KS in die Trocknungsphase TS wird jetzt im Vergleich zur speziellen Abpumptechnik APS während der Übergänge in den vorherigen Phasen VS, RS, ZS, KS so angepasst, dass die gesamte Klarspülflotte abgepumpt wird, ohne auf die speziellen Wärmeübergangszeiten im Wärmetauscher 12 Rücksicht zu nehmen. Das bestehende Abpumpen wird dahingehend modifiziert, dass ein extra Kaltwasser-Schluck zur Kühlung des Schlauchs in das Gerät 1 eingefüllt (Schritt KE) und sofort wieder abgepumpt wird (Schritt KA). Die Verweildauer (Schritt KZ) des kalten Wassers im innenliegenden Ablaufschlauch 20 wird so gewählt, dass die optimale Abkühlung des Schlauches 12 erreicht werden kann. Die erneute Füllung (Schritt WFS) des bis hierhin leeren Wärmetauschers 12 erfolgt dann im Anschluss an die Verweilzeit KZ, so dass von einem gleichbleibendem Temperaturniveau im direkten Vergleich zu einem herkömmlichen Wärmetauscher ausgegangen werden kann.

### Bezugszeichenliste

- 1: Geschirrspülmaschine
- 2: Spülbehälter
- 3: Tür
- 4: Spülkammer
- 5: Gehäuse
- 6: Bedieneinrichtung
- 7: Anzeigeeinrichtung
- 8: Steuereinrichtung
- 9: unterer Geschirrkorb
- 10: oberer Geschirrkorb
- 11: Wasserversorgungseinrichtung
- 12: Wasserbehälter
- 13: Ablaufventil
- 14: Wassereinlass
- 15: Sammelbehälter
- 16: Heizpumpe
- 17: oberer Sprüharm
- 18: unterer Sprüharm
- 19: Laugenpumpe
- 20: Abflussrohrleitung
- 21: Abwasserentsorgungseinrichtung
- 22: Öffnung
- 23: Öffnung
- 24: Clipse
- 25: Wandabschnitt, Kondensationsfläche
- 26: Boden
- 27: Leistungserkennungseinrichtung
- 28: Frischwasserventil

- FW: Frischwasser
- S: Spülwasser
- AW: Abwasser
- W: Wasser
- SP: Spülprogramm
- VS: Vorspülschritt
- RS: Reinigungsschritt
- ZS: Zwischenspülschritt
- KS: Klarspülschritt
- TS: Trocknungsschritt
- SFV: Schaltzustand des Frischwasserventils
- SZV: Schaltzustand des Ablaufventils
- SZU: Schaltzustand der Umwälzpumpe der Heizpumpe
- SZH: Schaltzustand der Heizeinrichtung der Heizpumpe
- SLP: Schaltzustand der Laugenpumpe
- VAW: Volumen des abgepumpten Abwassers eines Programmschritts
- APS: Abpumpsequenz
- SPS: Schlusspumpsequenz

- SAP: Spülwasserabpumpschritt
- KE: Kaltwassereinfüllschritt
- KA: Kaltwasserabpumpschritt
- WFS: Wasserbehälterfüllschritt
- KZ: Kühlzeit

## Patentansprüche

1. Geschirrspülmaschine, insbesondere Haushaltsgeschirrspülmaschine (1), mit einer Steuereinrichtung (8) zur Steuerung eines Spülgangs zum Reinigen von Spülgut anhand wenigstens eines in der Steuereinrichtung (8) hinterlegten Spülprogramms (SP), mit einem Spülbehälter (2) zur Aufnahme des Spülguts, mit einem wärmeleitend mit dem Spülbehälter (2) verbundenen Wasserbehälter (12) zum Bevorraten von Wasser (W), insbesondere von Frischwasser (FW), mit einer durch die Steuereinrichtung (8) steuerbaren Ventilanordnung (13, 28) zum Befüllen des Spülbehälters (2) mit Wasser (W), insbesondere mit Frischwasser (FW), und mit einer durch die Steuereinrichtung (8) steuerbaren Laugenpumpe (19) zum Abpumpen von Abwasser (AW) aus dem Spülbehälter (2) über eine Abflussrohrleitung (20), die durch den Wasserbehälter (12) hindurchgeführt ist, **dadurch gekennzeichnet, dass** das Spülprogramm (SP) so ausgebildet ist, dass am Ende eines Klarspülschritts (KS) eine Schlusspumpsequenz (SPS) vorgesehen ist, die einen Spülwasserabpumpschritt (SAP) zum Abpumpen eines während des Klarspülschritts (KS) zum Beaufschlagen von Spülgut verwendeten Spülwassers (S) als Abwasser (AW) mittels der Laugenpumpe (19), einen Kaltwassereinfüllschritt (KE) zum Einfüllen eines Kaltwasservolumens in den Spülbehälter (2) mittels der Ventilanordnung (13, 28) und einen Kaltwasserabpumpschritt (KA) zum Abpumpen des während des Kaltwassereinfüllschritts (KE) eingefüllten Kaltwasservolumens mittels der Laugenpumpe (19) als Abwasser (AW) umfasst.

2. Geschirrspülmaschine nach dem vorstehenden Anspruch, **dadurch gekennzeichnet, dass** das Spülprogramm (SP) so ausgebildet ist, dass das Abpumpen des während des Klarspülschritts (KS) zum Beaufschlagen von Spülgut verwendeten Spülwassers (S) als Abwasser (AW) mittels der Laugenpumpe (19) während des Spülwasserabpumpschritts (SAP) kontinuierlich erfolgt.

3. Geschirrspülmaschine nach einem der vorstehenden Ansprüche, **dadurch gekennzeichnet, dass** das Spülprogramm (SP) so ausgebildet ist, dass das Abpumpen des während des Klarspülschritts (KS) zum Beaufschlagen von Spülgut verwendeten Spülwassers (S) als Abwasser (AW) mittels der Laugenpumpe (19) während des Spülwasserabpumpschritts (SAP) so erfolgt, dass das während des Klarspülschritts (KS) zum Beaufschlagen von Spülgut verwendete Spülwasser (S) vollständig abgepumpt ist.

4. Geschirrspülmaschine nach einem der vorstehenden Ansprüche, **dadurch gekennzeichnet, dass** das Spülprogramm (SP) so ausgebildet ist, dass das während des Kaltwassereinfüllschritts (KE) in den Spülbehälter (2) mittels des Ablaufventils (13) eingefüllte Kaltwasservolumen aus Frischwasser (FW) besteht, welches insbesondere während des Kaltwassereinfüllschritts (KE) einer externen Wasserversorgungseinrichtung (11) entnommen ist.

5. Geschirrspülmaschine nach einem der vorstehenden Ansprüche, **dadurch gekennzeichnet, dass** das Spülprogramm (SP) so ausgebildet ist, dass das Kaltwasservolumen, welches während des Kaltwassereinfüllschritts (KE) eingefüllt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen der Laugenpumpe (19) und dem Wasserbehälter (12) angeordneten Abschnitts (20a) und eines im Wasserbehälter (12) angeordneten Abschnitts (20b) der Abflussrohrleitung (20) beträgt.

6. Geschirrspülmaschine nach einem der vorstehenden Ansprüche, **dadurch gekennzeichnet, dass** das Spülprogramm (SP) so ausgebildet ist, dass der Spülwasserabpumpschritt (SAP), der Kaltwassereinfüllschritt (KE) und der Kaltwasserabpumpschritt (KA) ohne zwischenzeitliche Pausen durchgeführt sind.

7. Geschirrspülmaschine nach einem der vorstehenden Ansprüche, **dadurch gekennzeichnet, dass** das Spülprogramm (SP) so ausgebildet ist, dass der Spülwasserabpumpschritt (SAP) und der Kaltwassereinfüllschritt (KE) ohne zeitliche Überlappung durchgeführt sind.

8. Geschirrspülmaschine nach einem der vorstehenden Ansprüche, **dadurch gekennzeichnet, dass** das Spülprogramm (SP) so ausgebildet ist, dass nach dem Beginn des Kaltwasserabpumpschritts (KA) ein Wasserbehälterfüllschritt (WFS) zum Befüllen des Wasserbehälters (12) mit Frischwasser (FW), welches insbesondere während des Wasserbehälterfüllschritt (WFS) einer externen Wasserversorgungseinrichtung (11) entnommen ist, durchgeführt ist.

9. Geschirrspülmaschine nach dem vorstehenden Anspruch, **dadurch gekennzeichnet, dass** das Spülprogramm (SP) so ausgebildet ist, dass zwischen dem Beginn des Kaltwasserabpumpschritts (KA) und dem Beginn des Wasserbehälterfüllschritts (WFS) eine Kühlzeit (KZ) zum Kühlen der Abflussrohrleitung (20) vorgesehen ist, welche wenigstens 30 s, bevorzugt 60 s, besonders bevorzugt wenigsten 90 s, beträgt.

10. Geschirrspülmaschine nach einem der vorstehenden Ansprüche, **dadurch gekennzeichnet, dass** die Abflussrohrleitung (20) als Abflussschlauch (20) und/oder als Wellenrohrleitung (20) ausgebildet ist.

11. Geschirrspülmaschine nach einem der vorstehenden Ansprüche, **dadurch gekennzeichnet, dass** die Abflussrohrleitung (20) als Rohrschlange mäandernd durch den Wasserbehälter (12) geführt ist.

12. Geschirrspülmaschine nach einem der vorstehenden Ansprüche, **dadurch gekennzeichnet, dass** die Abflussrohrleitung (20) zur einstückigen Verbindung einer Laugenpumpe (19) der Geschirrspülmaschine (1) mit einer Abwasserentsorgungseinrichtung (21) ausgebildet ist.

13. Geschirrspülmaschine nach einem der vorstehenden Ansprüche, **dadurch gekennzeichnet, dass** die Abflussrohrleitung (20) eingangsseitig durch einen Boden (26) des Wasserbehälter (12) geführt ist und/oder von einem unteren Teil des Wasserbehälters (12), insbesondere im Wesentlichen senkrecht, zu einem oberen Teil des Wasserbehälters (12) hochgeführt ist.

14. Verfahren zum Betreiben einer Geschirrspülmaschine (1), insbesondere nach einem der vorstehenden Ansprüche, mit einer Steuereinrichtung (8) zur Steuerung eines Spülgangs zum Reinigen von Spülgut anhand wenigstens eines in der Steuereinrichtung (8) hinterlegten Spülprogramms (SP), mit einem Spülbehälter (2) zur Aufnahme des Spülguts, mit einem Wasserbehälter (12) zum Bevorraten von Wasser, insbesondere von Frischwasser (FW), mit einer durch die Steuereinrichtung (8) steuerbaren Ventilanordnung (13, 28) zum Befüllen des Spülbehälters (2) mit Wasser (W), insbesondere mit Frischwasser (FW), und mit einer durch die Steuereinrichtung (8) steuerbaren Laugenpumpe (19) zum Abpumpen von Abwasser (AW) aus dem Spülbehälter (2) über eine Abflussrohrleitung (20), die durch den Wasserbehälter (12) hindurch geführt ist, **dadurch gekennzeichnet, dass** das Spülprogramm (SP) so ausgebildet ist, dass am Ende eines Klarspülschritts (KS) eine Schlusspumpsequenz (SPS) durchgeführt wird, die einen Spülwasserabpumpschritt (SAP), bei dem ein während des Klarspülschritts (KS) zum Beaufschlagen von Spülgut verwendetes Spülwasser (S) mittels der Laugenpumpe (19) als Abwasser (AW) abgepumpt wird, einen Kaltwassereinfüllschritt (KE), bei dem ein Kaltwasservolumen mittels der Ventilanordnung (13, 28) in den Spülbehälter (2) eingefüllt wird, und einen Kaltwasserabpumpschritt (KA), bei dem das während des Kaltwassereinfüllschritts (KE) eingefüllte Kaltwasservolumen mittels der Laugenpumpe (19) als Abwasser (AW) abgepumpt wird, umfasst.

## Claims

1. Dishwasher, in particular household dishwasher (1), having a control device (8) for controlling a wash cycle for cleaning items to be washed on the basis of at least one wash program (SP) stored in the control device (8), having a washing container (2) for receiving the items to be washed, having a water container (12), connected in a heat-conducting manner with the washing container (2), for storing water (W), in particular fresh water (FW), having a valve arrangement (13, 28), which can be controlled by the control device (8), for filling the washing container (2) with water (W), in particular with fresh water (FW), and having a drainage pump (19), which can be controlled by the control device (8), for pumping off wastewater (AW) out of the washing container (2) by way of a drainage pipeline (20), which is guided through the water container (12), **characterised in that** the wash program (SP) is embodied so that a final pump sequence (SPS) is provided at the end of a rinsing step (KS), said final pump sequence comprising a rinsing water pumping step (SAP) for pumping off rinsing water (S) used to impinge on the items to be washed during the rinsing step (KS) as wastewater (AW) by means of the drainage pump (19), a cold water filling step (KE) for filling a cold water volume in the washing container (2) by means of the valve arrangement (13, 28) and a cold water drainage step (KA) for pumping off the cold water volume filled during the cold water filling step (KE) as wastewater (AW) by means of the drainage pump (19).

2. Dishwasher according to the preceding claim, **characterised in that** the wash program (SP) is embodied so that the rinsing water (S) used to impinge on the items to be washed during the rinsing step (KS) is pumped off continuously as wastewater (AW) by means of the drainage pump (19) during the rinsing water pumping step (SAP).

3. Dishwasher according to one of the preceding claims, **characterised in that** the wash program (SP) is embodied so that rinsing water (S) used to impinge on the items to be washed during the rinsing step (KS) is pumped off continuously as wastewater (AW) by means of the drainage pump (19) during the rinsing water pumping step (SAP) so that the rinsing water (S) used to impinge on the items to be washed during the rinsing step (KS) is completely pumped out.

4. Dishwasher according to one of the preceding claims, **characterised in that** the wash program (SP) is embodied so that the cold water volume filled into the washing container (2) by means of the drainage valve (13) during the cold water filling step (KE) consists of fresh water (FW) which is taken from an external water supply device (11) in particular during the cold water filling step (KE).

5. Dishwasher according to one of the preceding claims, **characterised in that** the wash program (SP) is embodied so that the cold water volume which is filled during the cold water filling step (KE) amounts to at least 70%, preferably at least 80%, particularly preferably at least 90%, and/or at most 130%, preferably at most 120%, particularly preferably at most 110%, of an inner volume of a section (20a) arranged between the drainage pump (19) and the water container (12) and a section (20b) of the drainage pipeline (20) arranged in the water container (12).

6. Dishwasher according to one of the preceding claims, **characterised in that** the wash program (SP) is embodied so that the rinsing water pumping step (SAP), the cold water filling step (KE) and the cold water drainage step (KA) are carried out without intermediate pauses.

7. Dishwasher according to one of the preceding claims, **characterised in that** the wash program (SP) is embodied so that the rinsing water pumping step (SAP) and the cold water filling step (KE) are carried out without a temporal overlap.

8. Dishwasher according to one of the preceding claims, **characterised in that** the wash program (SP) is embodied so that after the cold water drainage step (KA) has begun, a water container filling step (WFS) for filling the water container (12) with fresh water (FW), which is taken from an external water supply device (11) in particular during the water container filling step (WFS), is carried out.

9. Dishwasher according to the preceding claim, **characterised in that** the wash program (SP) is embodied so that a cooling time (KZ) for cooling the drainage pipeline (20) is provided between the start of the cold water drainage step (KA) and the start of the water container filling step (WFS), which cooling time amounts to at least 30 s, preferably 60 s, particularly preferably 90 s.

10. Dishwasher according to one of the preceding claims, **characterised in that** the drainage pipeline (20) is embodied as a discharge hose (20) and/or as a fluted pipeline (20).

11. Dishwasher according to one of the preceding claims, **characterised in that** the drainage pipeline (20) as a tube coil is guided in a meandering manner through the water container (12).

12. Dishwasher according to one of the preceding claims, **characterised in that** the drainage pipeline (20) is embodied to connect a drainage pump (19) of the dishwasher (1) with a wastewater disposal device (21) in one piece.

13. Dishwasher according to one of the preceding claims, **characterised in that** the drainage pipeline (20) is guided through a base (26) of the water container (12) on the input side and/or is guided upward from a lower part of the water container (12), in particular substantially vertically, to a top part of the water container (12).

14. Method for operating a dishwasher (1), in particular according to one of the preceding claims, having a control device (8) for controlling a wash cycle for cleaning items to be washed on the basis of at least one wash program (SP) stored in the control device (8), having a washing container (2) for receiving the items to be washed, having a water container (12) for storing water (W), in particular fresh water (FW), having a valve arrangement (13, 28), which can be controlled by the control device (8), for filling the washing container (2) with water (W), in particular with fresh water (FW), and having a drainage pump (19), which can be controlled by the control device (8), for pumping off wastewater (AW) out of the washing container (2) by way of a drainage pipeline (20), which is guided through the water container (12), **characterised in that** the wash program (SP) is embodied so that a final pump sequence (SPS) is carried out at the end of a rinsing step (KS), said final pump sequence comprising a rinsing water pumping step (SAP), in which a rinsing water (S) used to impinge on the items to be washed during the rinsing step (KS) is pumped off as wastewater (AW) by means of the drainage pump (19), a cold water filling step (KE), in which a cold water volume is filled in the washing container (2) by means of the valve arrangement (13, 28), and a cold water drainage step (KA), in which the cold water volume filled during the cold water filling step (KE) is pumped off as wastewater (AW) by means of the drainage pump (19).

## Revendications

1. Lave-vaisselle, plus particulièrement lave-vaisselle domestique (1), avec un dispositif de commande (8) pour le contrôle d'un processus de lavage pour le nettoyage de vaisselle à l'aide d'au moins un programme de lavage (SP) enregistré dans le dispositif de commande (8), avec un réservoir de lavage (2) pour le logement de la vaisselle, avec un réservoir d'eau (12) relié, avec une conduction thermique, avec le réservoir de lavage (2), pour la mise en réserve de l'eau (W), plus particulièrement de l'eau fraîche (FW), avec un dispositif à soupape (13, 28) contrôlable par le dispositif de commande (8), pour le remplissage du réservoir de lavage (2) avec de l'eau (W), plus particulièrement avec de l'eau fraîche (FW), et avec une pompe de vidange (19) contrôlable par le dispositif de commande (8) pour l'évacuation des eaux usées (AW) hors du réservoir de lavage (2) par l'intermédiaire d'une conduite d'évacuation (20) qui traverse le réservoir d'eau (12), **caractérisé en ce que** le programme de lavage (SP) est conçu de façon à ce que, à la fin d'une étape de rinçage (KS), une séquence de pompage finale (SPS) est prévue, qui comprend une étape d'évacuation de l'eau de lavage (SAP) pour l'évacuation d'une eau de lavage (S) utilisée pendant l'étape de rinçage (KS) pour la sollicitation de la vaisselle, sous la forme d'eau usée (AW), au moyen de la pompe de vidange (19), une étape d'introduction d'eau froide (KE) pour l'introduction d'un volume d'eau froide dans le réservoir de lavage (2) au moyen du dispositif à soupape (13, 28), et une étape d'évacuation de l'eau froide (KA) pour, l'évacuation du volume d'eau froide introduit pendant l'étape d'introduction d'eau froide (KE) au moyen de la pompe de vidange (19), sous la forme d'eau usée (AW).

2. Lave-vaisselle selon la revendication précédente, **caractérisé en ce que** le programme de lavage (SP) est conçu de façon à ce que l'évacuation de l'eau de lavage (S) utilisée pendant l'étape de rinçage (KS) pour la sollicitation de la vaisselle sous la forme d'eau usée (AW) au moyen de la pompe de vidange (19) a lieu de manière continue pendant l'étape d'évacuation de l'eau de lavage (SAP).

3. Lave-vaisselle selon l'une des revendications précédentes, **caractérisé en ce que** le programme de lavage (SP) est conçu de façon à ce que l'évacuation de l'eau de lavage (S) utilisée pendant l'étape de rinçage (KS) pour la sollicitation de la vaisselle sous la forme d'eau usée (AW) au moyen de la pompe de vidange (19) a lieu pendant l'étape d'évacuation de l'eau de lavage (SAP), de façon à ce que l'eau de lavage (S) utilisée pendant l'étape de rinçage (KS) pour la sollicitation de la vaisselle soit entièrement évacuée.

4. Lave-vaisselle selon l'une des revendications précédentes, **caractérisé en ce que** le programme de lavage (SP) est conçu de façon à ce que le volume d'eau froide introduit pendant l'étape d'introduction d'eau froide (KE) dans le réservoir de lavage (2) au moyen de la soupape d'évacuation (13) est constitué d'eau fraîche (FW) qui est prélevée plus particulièrement pendant l'étape d'introduction d'eau froide (KE) dans un dispositif d'alimentation en eau externe (11).

5. Lave-vaisselle selon l'une des revendications précédentes, **caractérisé en ce que** le programme de lavage (SP) est conçu de façon à ce que le volume d'eau froide introduit pendant l'étape d'introduction d'eau froide (KE) représente au moins 70 %, de préférence au moins 80 %, plus particulièrement de préférence au moins 90 % et/ou au maximum 130 %, de préférence au maximum 120 %, plus particulièrement de préférence au maximum 110 %, d'un volume interne d'une portion (20a), disposée entre la pompe de vidange (19) et le réservoir d'eau (12), et d'une portion (20b), disposée dans le réservoir d'eau (12), de la conduite d'évacuation (20).

6. Lave-vaisselle selon l'une des revendications précédentes, **caractérisé en ce que** le programme de lavage (SP) est conçu de façon à ce que l'étape d'évacuation de l'eau de lavage (SAP), l'étape d'introduction d'eau froide (KE) et l'étape d'évacuation de l'eau froide (KA) sont exécutées sans pauses intermédiaires.

7. Lave-vaisselle selon l'une des revendications précédentes, **caractérisé en ce que** le programme de lavage (SP) est conçu de façon à ce que l'étape d'évacuation de l'eau de lavage (SAP) et l'étape d'introduction d'eau froide (KE) sont exécutées sans se superposer temporellement.

8. Lave-vaisselle selon l'une des revendications précédentes, **caractérisé en ce que** le programme de lavage (SP) est conçu de façon à ce que, après le début de l'étape d'évacuation de l'eau froide (KA), est exécutée une étape de remplissage du réservoir d'eau (WFS) pour le remplissage du réservoir d'eau (12) avec de l'eau fraîche (FW), qui est prélevée, plus particulièrement pendant l'étape de remplissage du réservoir d'eau (WFS), dans un dispositif d'alimentation en eau externe (11).

9. Lave-vaisselle selon la revendication précédente, **caractérisé en ce que** le programme de lavage (SP) est conçu de façon à ce que, entre le début de l'étape d'évacuation de l'eau froide (KA) et le début de l'étape de remplissage du réservoir d'eau (WFS), un temps de refroidissement (KZ) pour le refroidissement de la conduite d'évacuation (20) est prévu, qui est égal à au moins 30 s, de préférence 60 s, plus particulièrement de préférence égal à au moins 90 s.

10. Lave-vaisselle selon l'une des revendications précédentes, **caractérisé en ce que** la conduite d'évacuation (20) est conçue comme un tuyau d'évacuation (20) et/ou comme une conduite ondulée (20).

11. Lave-vaisselle selon l'une des revendications précédentes, **caractérisé en ce que** la conduite d'évacuation (20) est guidée comme un serpentin méandrant à travers le réservoir d'eau (12).

12. Lave-vaisselle selon l'une des revendications précédentes, **caractérisé en ce que** la conduite d'évacuation (20) est conçue pour la liaison d'une seule pièce d'une pompe de vidange (19) du lave-vaisselle (1) avec un dispositif d'évacuation des eaux usés (21).

13. Lave-vaisselle selon l'une des revendications précédentes, **caractérisé en ce que** la conduite d'évacuation (20) est guidée, côté entrée, à travers un fond (26) du réservoir d'eau (12) et/ou est soulevée d'une partie inférieure du réservoir d'eau (12), plus particulièrement de manière globalement verticale, vers une partie supérieure du réservoir d'eau (12).

14. Procédé de fonctionnement d'un lave-vaisselle (1), plus particulièrement selon l'une des revendications précédentes, avec un dispositif de commande (8) pour le contrôle d'un processus de lavage pour le nettoyage de vaisselle à l'aide d'au moins un programme de lavage (SP) enregistré dans le dispositif de commande (8), avec un réservoir de lavage (2) pour le logement de la vaisselle, avec un réservoir d'eau (12) relié, avec une conduction thermique, avec le réservoir de lavage (2), pour la mise en réserve de l'eau, plus particulièrement de l'eau fraîche (FW), avec un dispositif à soupape (13, 28) contrôlable par le dispositif de commande (8), pour le remplissage du réservoir de lavage (2) avec de l'eau (W), plus particulièrement avec de l'eau fraîche (FW), et avec une pompe de vidange (19) contrôlable par le dispositif de commande (8) pour l'évacuation des eaux usées (AW) hors du réservoir de lavage (2) par l'intermédiaire d'une conduite d'évacuation (20) qui traverse le réservoir d'eau (12), **caractérisé en ce que** le programme de lavage (SP) est conçu de façon à ce que, à la fin d'une étape de rinçage (KS), une séquence de pompage finale (SPS) est exécutée, qui comprend une étape d'évacuation de l'eau de lavage (SAP), dans laquelle une eau de lavage (S), utilisée pendant l'étape de rinçage (KS) pour la sollicitation de la vaisselle est évacuée, sous la forme d'eau usée (AW), au moyen de la pompe de vidange (19), une étape d'introduction d'eau froide (KE) dans laquelle un volume d'eau froide est introduit dans le réservoir de lavage (2) au moyen du dispositif à soupape (13, 28), et une étape d'évacuation de l'eau froide (KA) dans laquelle le volume d'eau froide introduit pendant l'étape d'introduction d'eau froide (KE) est évacué au moyen de la pompe de vidange (19), sous la forme d'eau usée (AW).
